# EUROPEAN PATENT SPECIFICATION

(11) **EP 0 425 989 B1**
(45) Date of publication and mention of the grant of the patent: **15.02.1995**
(21) Application number: 90120332.3
(22) Date of filing: 23.10.1990
(51) Int. Cl.: H04N 5/74, H04N 9/31

(54) **Liquid crystal video projector**
Flüssigkristallvideoprojektor
Projecteur vidéo à cristaux liquides

(30) Priority: 31.10.1989 JP 283532/89
(43) Date of publication of application: 08.05.1991
(60) Divisional application: 94107454.4
(73) Proprietor: SEIKO EPSON CORPORATION, Shinjuku-ku Tokyo-to (JP)
(72) Inventor: Miyashita, Kiyoshi, c/o Seiko Epson Corporation, Nagano-ken (JP)
(74) Representative: Hoffmann, Eckart, Dipl.-Ing.

(56) References cited:
- EP-A- 0 192 023
- EP-A- 0 239 024
- WO-A-89/06417

## Description

The present invention relates to a liquid crystal video projector.

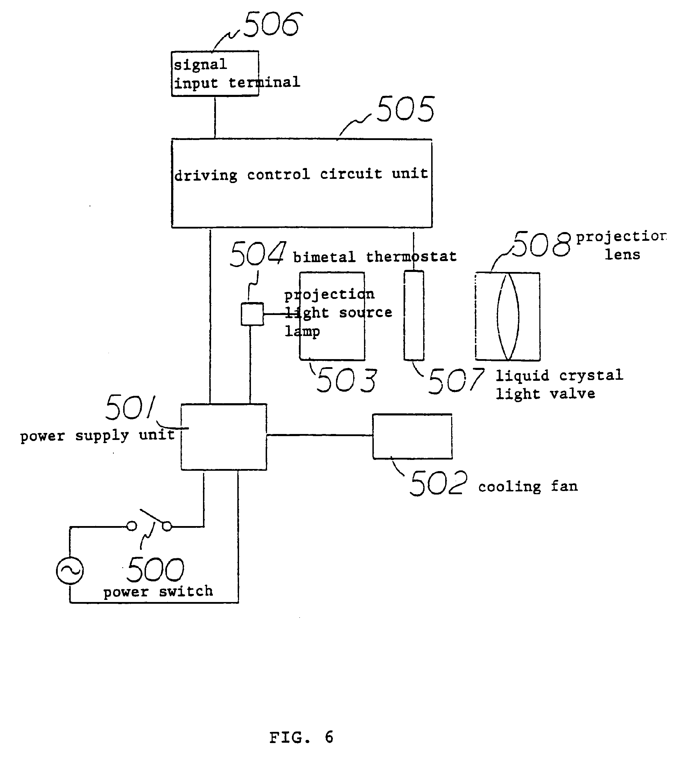

Fig. 6 is a block diagram illustrating one example of a prior art liquid crystal video projector. 500 designates a power supply switch, and 501 is a power supply unit for supplying electric power to a drive control circuit unit 505. A bimetal thermostat 504 is connected between the power supply unit 501 and a lamp 503 forming a projection light source. The thermostat 504 cuts off the supply of electric power to the lamp 503, when a predetermined temperature is reached, for instance when an air vent is blocked so that the interior of the liquid crystal video projector cannot be sufficiently cooled by a cooling fan 502. A signal input terminal 506 is connected to the drive control circuit unit 505. A liquid crystal light valve 507 is driven by the drive control circuit unit 505. Projection light modulated by the liquid crystal light valve 507 is focused by means of a projection lens 508 on a screen to form an image thereon.

One example of such a liquid crystal video projector is disclosed for instance in Japanese Patent Application No. 63-133872.

The following problems are inherent to the above-described prior art liquid crystal video projector.

Firstly, for instance, with the foregoing bimetal thermostat, even when the internal temperature of the liquid crystal video projector increases abnormally due to a blockade of the air vent of the liquid crystal video projector, the user cannot realize the problem until the bimetal thermostat cuts off the light.

Besides, even when a projection light source is extinguished after operation of the bimetal thermostat, the user cannot easily judge whether or not the extinction is due to a fault of the projection light source itself.

Secondly, in the prior art liquid crystal video projector, a signal input source is switched or the picture quality is adjusted by manually operating a mechanical switch or mechanical adjustment means. Focalization of the lens is performed similarly by a manual operation. Considering a normal mode of use of the liquid crystal video projector, there exists a big distance in position between the liquid crystal video projector body, the screen and the user (viewer). This in turn presents a problem of causing inconvenience incidental to the operation.

It is an object of the present invention , to remedy the problems described above and to provide a liquid crystal video projector constructed to improve the operability.

This object is achieved with a liquid crystal video projector as claimed.

With the liquid crystal video projector according to the present invention, the inputs from the input unit, the non-lighting detector and the temperature detector serve to control the main power supply control unit, the light source power supply control unit, the input changeover unit, the D/A converter, the lens control unit, the alarm unit, the fan motor control unit and the display unit by use of the input means, the command discriminating means, the power supply control means, the input changeover means, the picture processing means, the voice processing means, the lens control means, the timer means, the alarm issuing means, the fan motor control means, the non-lighting detection means, the temperature detection means and the display control means. Those operations are stored in the storage unit and indicated on the display unit and the alarm unit. The aforementioned individual units and detectors are unitarily controlled by the above-described means.

The storage unit stores the previous operating status even when the liquid crystal video projector is switched off. Thus, there is no necessity for resetting the operating status when the liquid crystal video projector is switched on again.

One embodiment of the present invention will be described hereinafter with reference to the accompanying drawings, in which:
- Fig. 1: is a functional block diagram illustrating a fundamental construction of the present invention,
- Figs. 2(a) to 2(f): are block diagrams showing one embodiment in which the present invention is constructed by use of a microcomputer,
- Figs. 3(a) to 3(z): are flowcharts of the controlling operations of the invention,
- Fig. 4: is a diagram showing the sequence of input sources changed over in accordance with a mode selecting command according to the present invention,
- Fig. 5: is a diagram showing the sequence of adjustment items during a picture quality adjustment changed over in accordance with a picture command according to the present invention, and
- Fig. 6: is a block diagram depicting a construction of a prior art liquid crystal video projector.

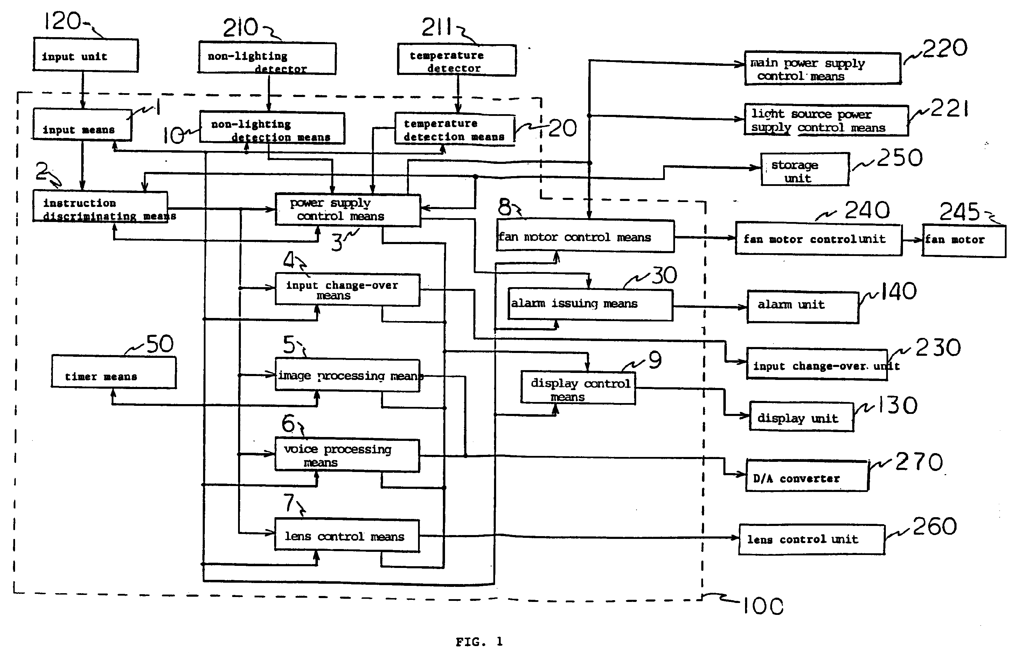

Fig. 1 is a functional block diagram illustrating a fundamental construction of the liquid crystal video projector according to this invention.

Referring to Fig. 1, there is depicted an input unit 120 for inputting an operating status of the liquid crystal video projector (hereinafter abbreviated to LVP) to an input means 1. Connected to the input means 1 is an instruction discriminating means 2 for judging the operating status of the LVP on the basis of the output from the input means 1. Based on the judged instruction or command, a power supply control means 3, an input changeover means 4, a picture processing means 5, a voice processing means 6 and a lens control means 7 are activated. 210 is a non-lighting detector for detecting non-lighting of the projection light source. A non-lighting detection means 10 outputs information on the lighting or non-lighting of the projection light source to the power supply control means 3 when the non-lighting detector 210 keeps indicating non-lighting of the projection light source for a preset time. In the case of detecting non-lighting of the projection light source by the non-lighting detection means 10, when the power supply is turned on, a power supply remaking operation is effected a preset limited number of times at a preset time interval. If non-lighting of the projection light source is detected by the non-lighting detection means even during the power supply remaking operation, information indicating a fault of the projection light source is stored in a storage unit 250 and then displayed on a display unit 130 via a display control means 9. 211 is a temperature detector for detecting a temperature within the LVP. The temperature detector 211 transmits a temperature signal and the information created by the temperature detection means 20 based on the temperature signal is periodically outputted from the temperature detection means 20 to the power supply control means 3 at a preset time interval. A control signal is outputted from a fan motor control means 8 to a fan motor control unit 240 in accordance with the temperature information given from the temperature detection means 20. 4 is an input changeover means for changing over an input source connected to an input changeover unit 230. The picture processing means 5 controls picture qualities by e.g., adjusting the hue and increasing or decreasing the color density, contrast, sharpness and brightness. The information on the picture qualities is outputted to a D/A converter 270. The picture quality information controlled by the picture processing means 5 is stored in the storage unit 250. The information is then reproduced when the power supply is turned on. 6 is a voice processing means for controlling an increment and decrement of a sound volume on the basis of an output from the instruction discriminating means 2 and for outputting voice information to the D/A converter 270. The voice information controlled by the voice processing means 6 is stored in the storage unit 250 so that it can be reproduced when the power supply is turned on after it had been turned off. 7 is a lens control means for outputting signals for lens control such as autofocusing, power focusing, power zooming and power angular adjustment (between the focal plane and the optical axis of the lens, hereinafter referred to as swing) to the lens control unit 260 on the basis of outputs from the instruction discriminating means 2. The display control means 9 controls the display of the operating statuses of the respective means on the basis of outputs from the power supply control means 3, the input changeover means 4, the picture processing means 5, the voice processing means 6 and the lens control means 7. In response to output signals transmitted from the display control means 9 the display unit 130 performs the display operation.

If an abnormal operation is detected by the power supply control means 3, an alarm unit 140 is driven by an alarm issuing means 30 to give alarm.

A timer means 50 controls the time in the respective means.

The numeral 221 denotes a light source power supply control unit and 220 a main power supply control unit, both being controlled by an output from the power supply control means 3.

A computer-based control module 100 comprises the input means 1, the instruction discriminating means 2, the power supply control means 3, the input changeover means 4, the picture processing means 5, the voice processing means 6, the lens control means 7, the non-lighting detection means 10, the temperature detection means 20, the fan motor control means 8, the display control means 9 and the alarm issuing means 30.

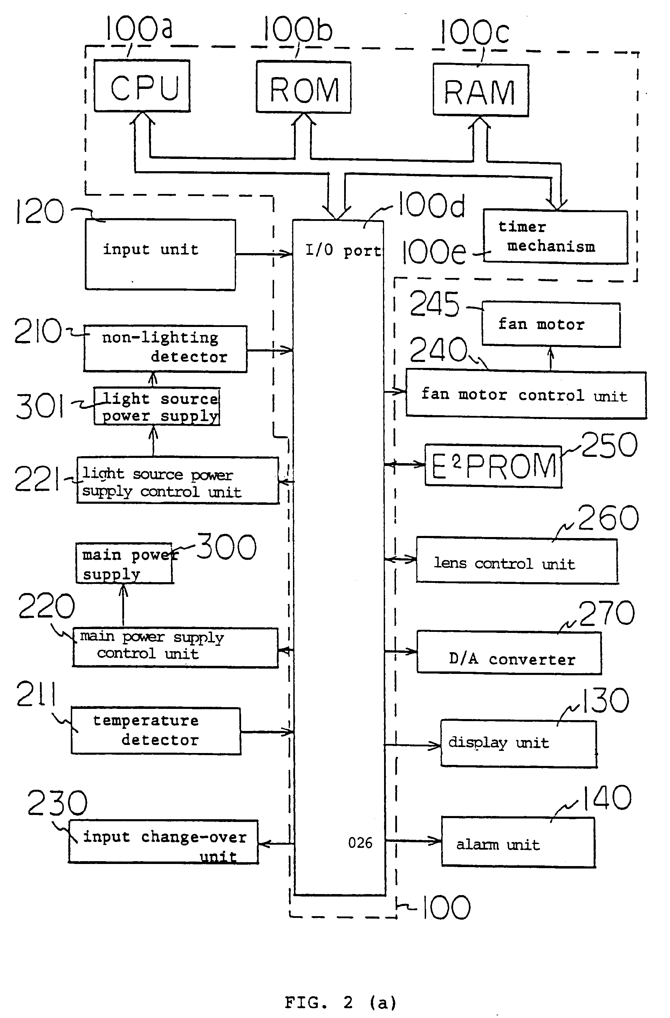

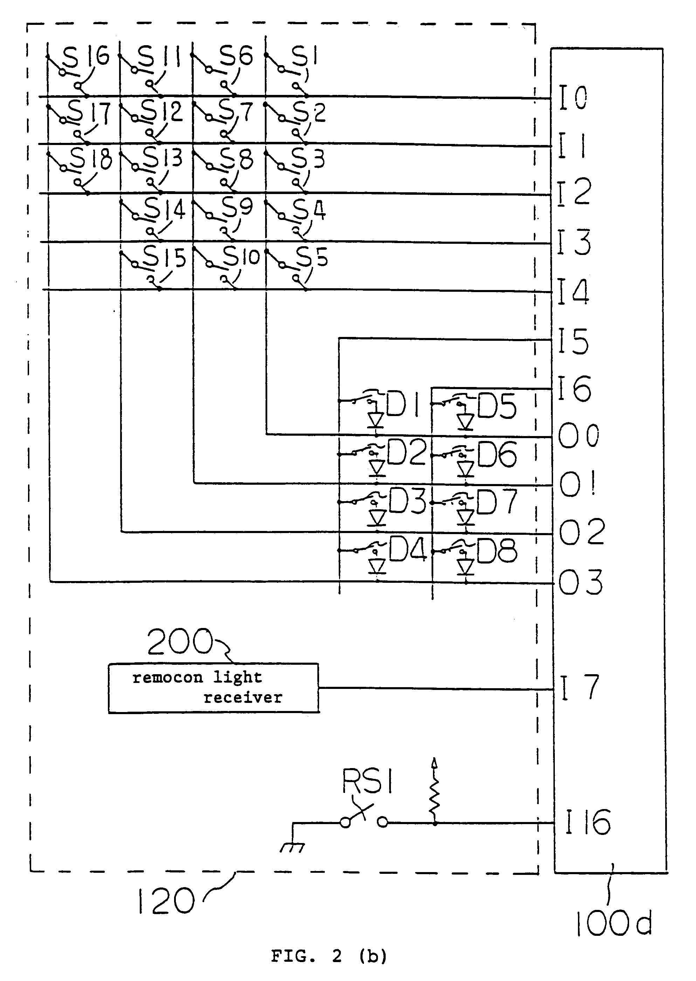

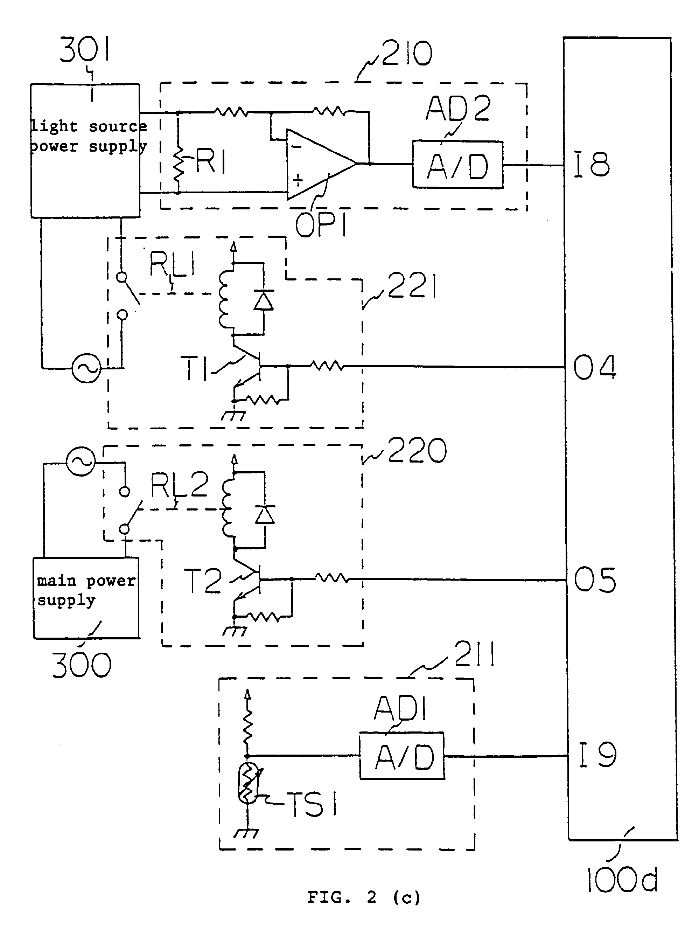

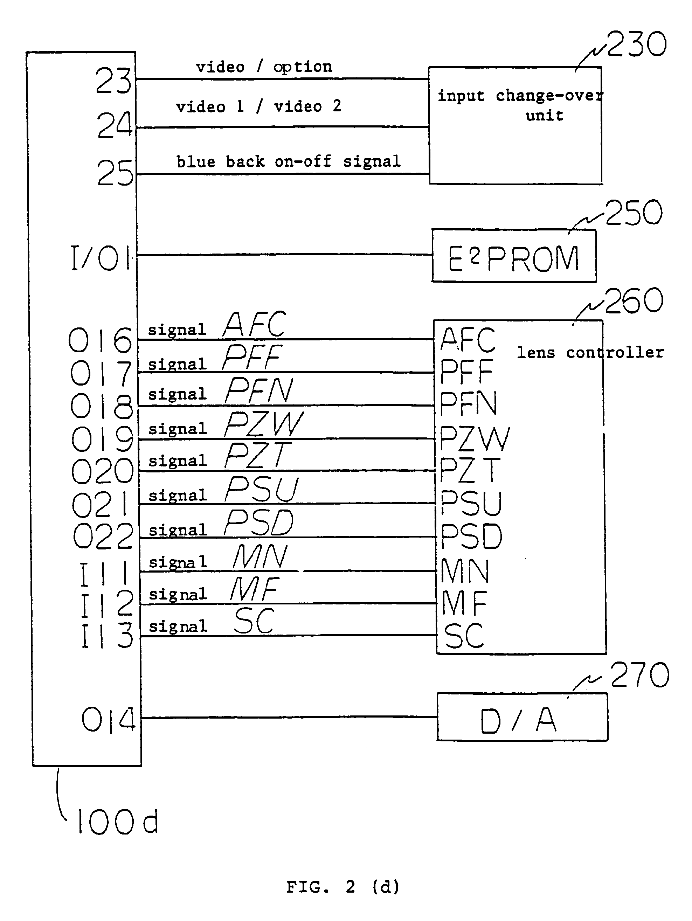

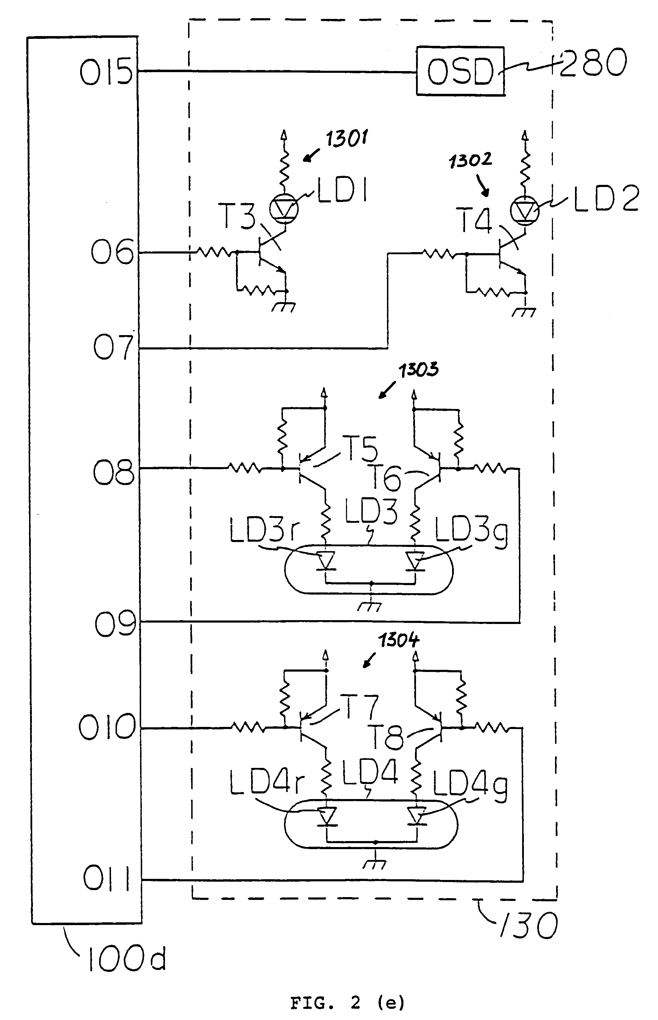

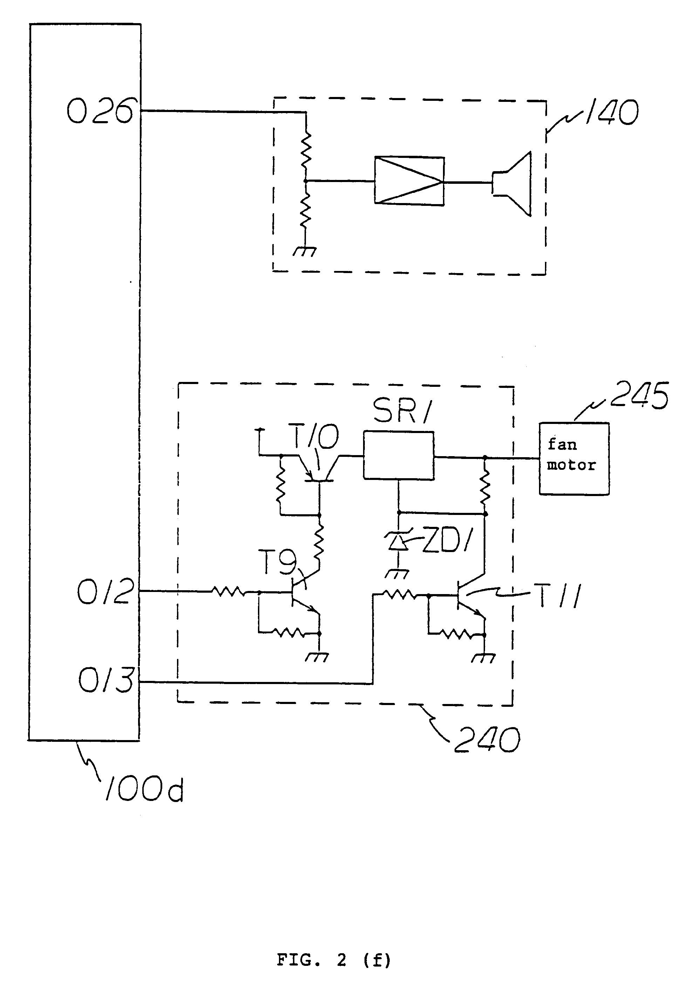

Figs. 2(a) to 2(f) are block diagrams showing one embodiment wherein the liquid crystal video projector of the invention is constructed by use of a microcomputer.

A microcomputer system constituting the control module 100 is composed of a CPU 100a, a ROM 100b, a RAM 100c, an I/O port 100d and a timer mechanism 100e, as is shown in Fig 2(a).

Referring to Fig. 2(b), command switches S1-S18 and D1-D8 are connected to ports IO-I6 and O0-O3 of the I/O port 100d. The switches include a power switch S1, a muting switch S2, a mode switch S3, a sound volume decreasing switch S4, a sound volume increasing switch S5, a pattern switch S6, a power focusing far switch S7, a power focusing near switch S8, a minus switch S9, a plus switch S10, a standard switch S11, a picture switch S12, a power zoom wide switch S13, a power zoom tele switch 14, an auto-focus switch S15, a power swing-up switch S16, a power swing-down switch S17, an auto-swing switch S18, an on-screen switch D1, a focus super switch D2, a focusing priority switch D3, a focus AF switch D4, an option A switch D7 and an option B switch D8. Depression of any of the switches can be confirmed by taking in a signal outputted from anyone of the output ports O0 through O3 by L-level scanning. Note that the take-process is an interrupt process. Connected to the input port I7 is an infrared-ray remote control light receiver (hereinafter referred to as a remocon light receiver) 200 to which a command signal is inputted from a remote controller. The command switches S1-S18 and D1-D8 and the remocon light receiver 200 are combined to constitute the input unit 120.

Referring now to Fig. 2(c), the light source power supply control unit 221 is shown to include a transistor T1 and a relay RL1 as the main components. When the signal level of the output port O4 is H, the transistor T1 is switched on to energize the relay RL1 which then connects a light source power supply 301 to an electric power source.

The main power supply control unit 220 has the same construction as the light source power supply control unit 221, including a transistor T2 and a relay RL2. When the signal level of the output port O5 is H the transistor T2 is switched on to energize the relay RL2 which then connects a main power supply 300 to an electric power source.

The temperature detector 211 is connected to the input port I9 and comprises a voltage divider including a temperature sensor TS1 and an A/D converter AD1. The A/D converter AD1 converts the temperature dependent analog signal from the voltage divider into a digital value which is then applied to the input port I9.

The non-lighting detector 210 for detecting non-lighting of the projection light source is connected to the input port I8. The current of the projection light source is made to flow through a detection resistor R1 so that the voltage drop at the resistor R1 is a measure of the projection light source current. A voltage amplifier OP1 amplifies the voltage drop between the two ends of the resistor R1. An A/D converter A/D 2 converts the amplified signal into a digital value which is than inputted to the input port I8.

Fig. 2(e) shows the display unit 130 to include lamp circuits 1301, 1302, 1303 and 1304 and an on-screen display unit (OSD) 280.

Lamp circuit 1301 includes a temperature alarm lamp LD1 connected via a transistor T3 to the output port O6. When the signal level of the output port O6 is H the transistor T3 is turned on to light up the temperature alarm lamp LD1. The lamp circuit 1302 includes a light source life-span lamp LD2 connected via a transistor T4 to the output port O7. When the signal level of output port O7 is H, the transistor T4 is switched on to thereby light up the light source life-span lamp LD2. The lamp circuit 1303 includes a light source operation lamp LD3r which is connected via a transistor T5 to the output port O8, and a light source operation lamp LD3g which is connected via a transistor T6 to the output port O9. The light source lamps LD3r and LD3g emit red and green light respectively and both are united into one body to from a lamp LD3. When the signal level of the output port O8 is L the transistor T5 is turned on to thereby light up the light source operation lamp LD3r. When the signal level of the output port O9 is L the transistor T6 is turned on to light up the light source operation lamp LD3g. When L-level signals are simultaneously output from the output ports O8 and O9, the light source operation lamps LD3r and LD3g will simultaneously lit up and orange light will be emitted.

The lamp circuit 1304 has the same construction as the lamp circuit 1303 and includes power supply display lamps LD4r and LD4g driven by transistors T7 and T8 which are connected to the output ports O10 and O11, respectively. The power supply display lamps LD4r and LD4g are united into one body to form a lamp LD4. The operation of the lamp circuit 1304 is the same as has been explained with respect to the lamp circuit 1303.

As shown in Fig. 2(f), connected to the output ports O12 and O13 is the fan motor control unit 240 including transistors T9 through T11, a Zener diode ZD1 and a three-terminal regulator SR1. A signal for controlling rotation or non-rotation of a fan motor 245 is outputted from the output port O12. When the signal level of the output port O12 is H, the transistors T9 and T10 are switched on to supply electric power to the fan motor 245 via the regulator SR1. Outputted from the output port O13 is a signal for controlling the rotational speed of the fan motor 245. When the signal level of the output port O13 is L the transistor T11 is turned off. The output voltage of the three-terminal regulator SR1 is then higher by the Zener voltage of the Zener diode ZD1 than it is in the conductive state of the transistor T11. Therefore, in this state the fan motor 245 rotates at a relatively high speed resulting in an increase of air quantity moved by the fan, and correspondingly resulting in an increase of the cooling effect of the fan. When the signal level of the output port O13 is H, the transistor T11 is switched on whereby the cathode of the Zener diode ZD1 is connected to ground potential. Thereby the output voltage of the regulator SR1 is decreased. As a result the fan motor rotates at a relatively low speed to cause a smaller air throughput by the fan and a reduction of the noises produced by the fan.

As shown in Fig. 2(d), connected to the I/O port I/O1 is the storage unit 250 which is an electrically erasable programmable ROM, commonly referred to as E²PROM. This storage unit keeps the information even when the power supply is turned off.

The D/A converter 270 is connected to the output port O14. Connected to the output port O15 (Fig. 2(e)) is the on-screen display unit 280 (hereinafter abbreviated to OSD). Pieces of information of the control module 100 are projected on a screen by means of the OSD.

Referring to Fig. 2(d) again, control signals for the lens control unit 260 are outputted from the output ports O16 through O22. Sensor signals of the lens control unit 260 are inputted to the input ports I11 through I14. An auto-focus-on AFC signal is outputted from the output port O16. A power focus-far-side driving signal PFF is outputted from the output port O17. A power focus-near-side driving signal PFN is outputted from the output port O18. A power zoom-wide-side driving signal PZW is outputted from the output port O19. A power zoom-tele-side driving signal PZT is outputted from the output port O20. Outputted from the output ports O21 and O22 are a power swing-up signal PSU and a power swing-down signal PSD. When the signal outputted from the output port O21 assumes an H level, the screen ascends. When the signal outputted from the output port O22 assumes an H level the screen descends. Inputted from the lens control unit 260 to the input port I11 is a focus-near-side driving signal MN. A focus-far-side driving signal MF is inputted from the lens control unit 260 to the input port I12. A lens central position signal SC of the lens control unit 260 is inputted to the input port I13.

Outputted from the output port O23 to the input changeover unit 230 is a signal for changing over the input source from an external input terminal to an internal option input terminal. Outputted from the output port O24 to the input changeover unit 230 is a signal for changing over between a video 1 input and a video 2 input to select the input source. A blue back on-off signal is outputted from the output port O25 to the input changeover unit 230.

Inputted to the input port I16 in Fig. 2(b) is a signal for resetting a light source cut-off flag stored in the storage unit 250 when the light source has been replaced.

Referring to Fig. 2(a) an alarm signal is outputted from the output port O26 to the alarm unit 140.

A control program and data used by the program are stored in the ROM 100b.

The RAM 100c is used as a work memory during execution of the control program and further provides a variety of flag memory areas to hold the data of the storage unit 250. The storage unit stores an operating status of the liquid crystal video projector such as a set value of the D/A converter 270 (Fig. 2(d)) and the light source cut-off flag.

The timer mechanism 100e functions as a timer during the execution of the control program.

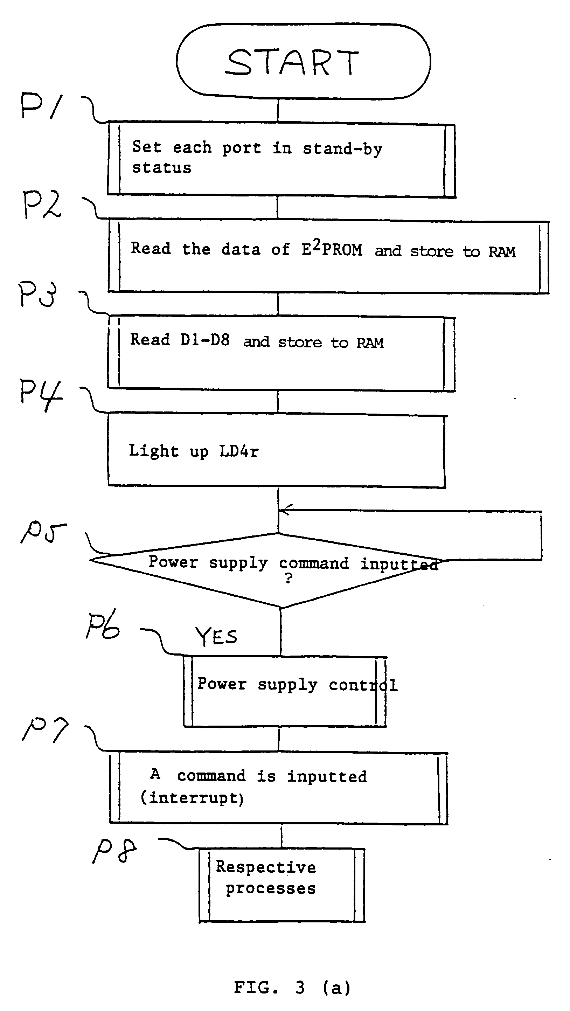

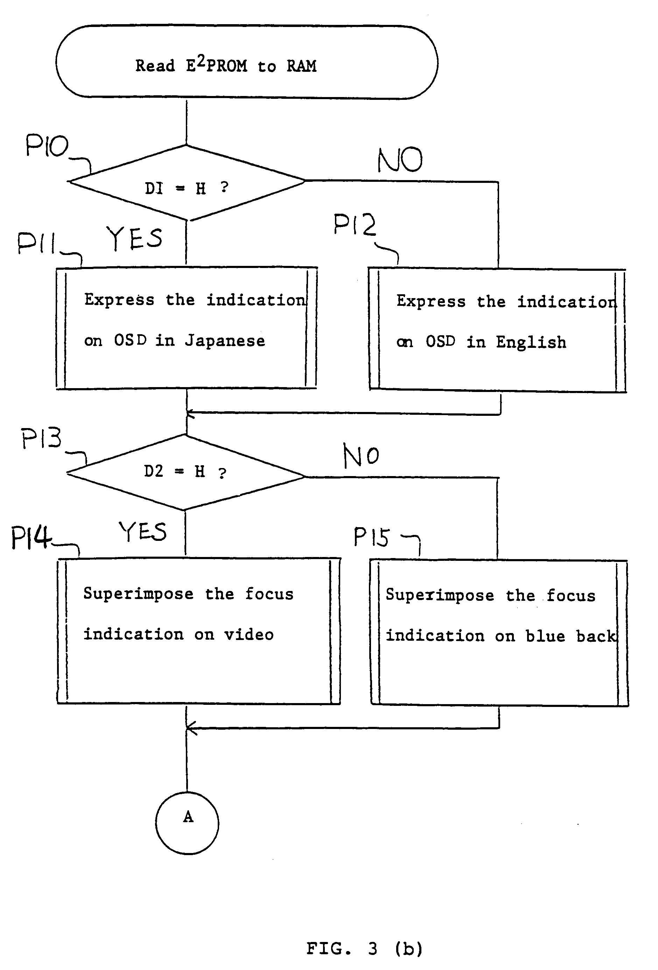

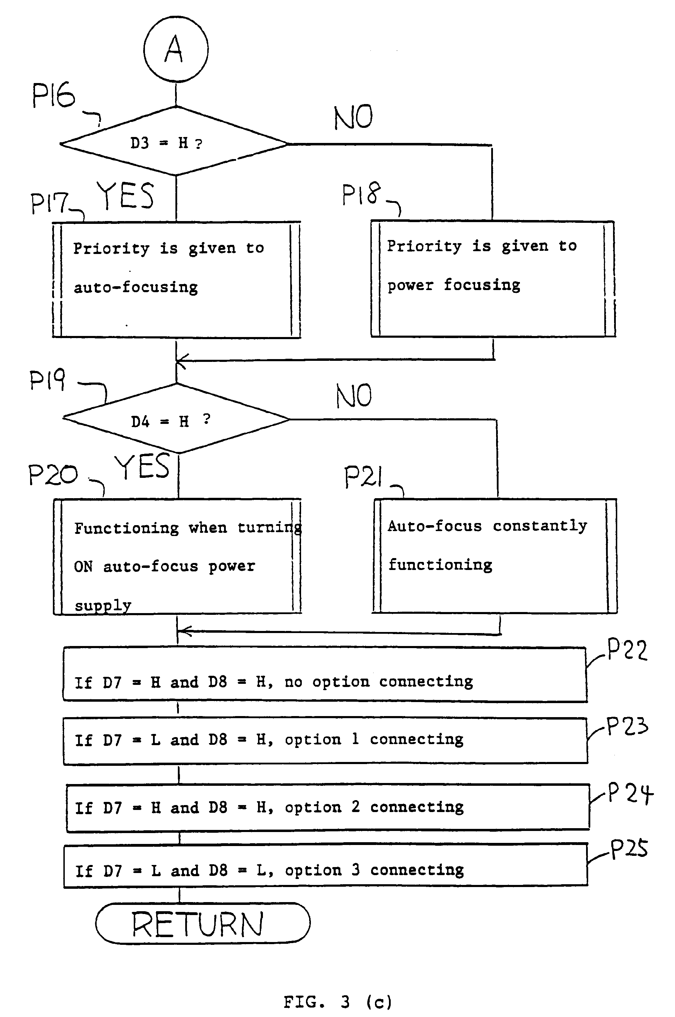

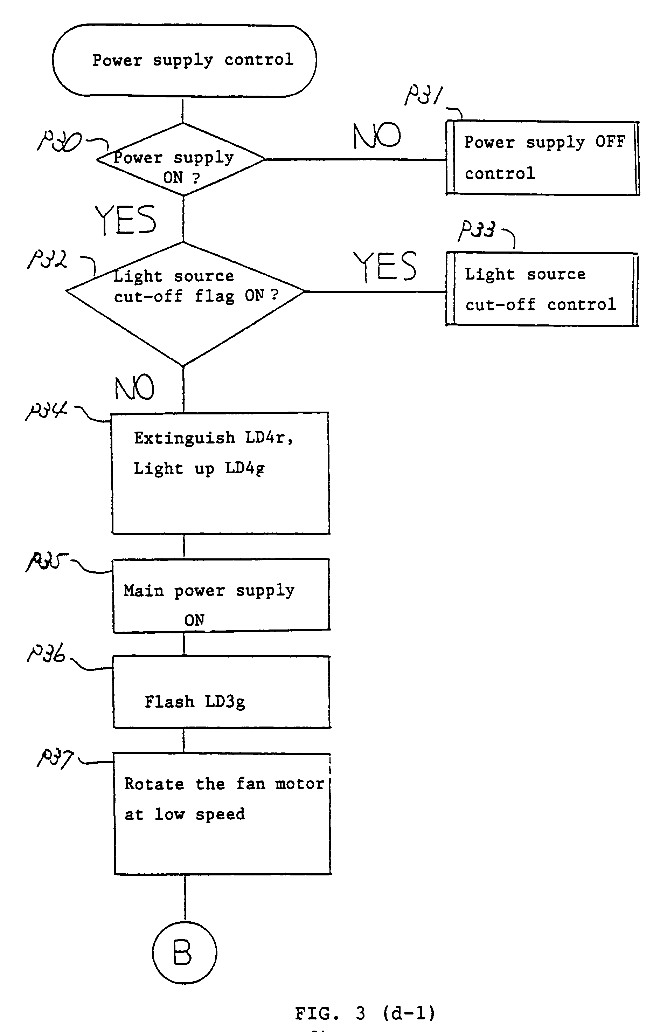

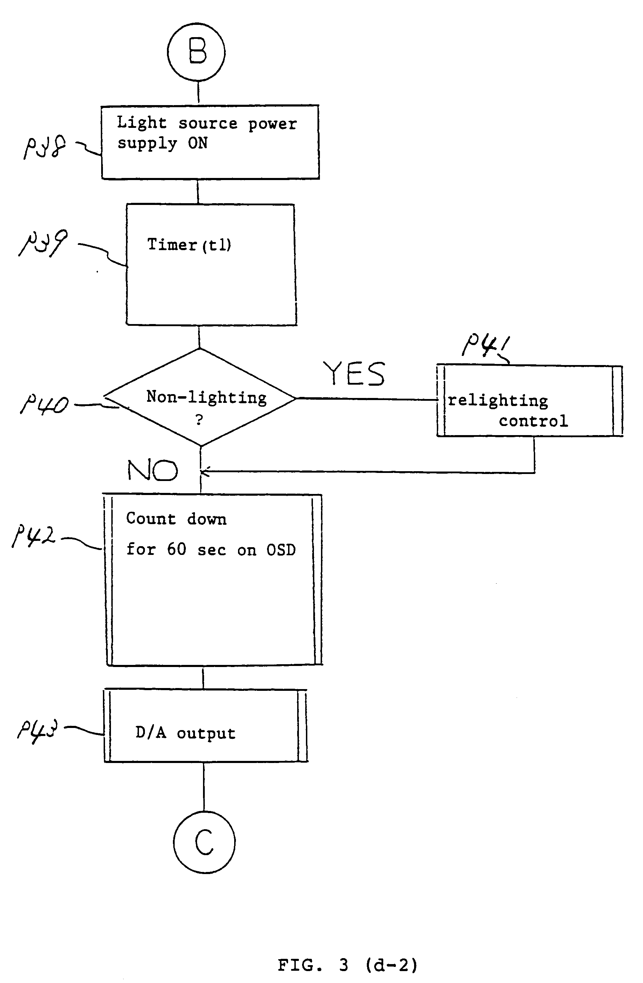

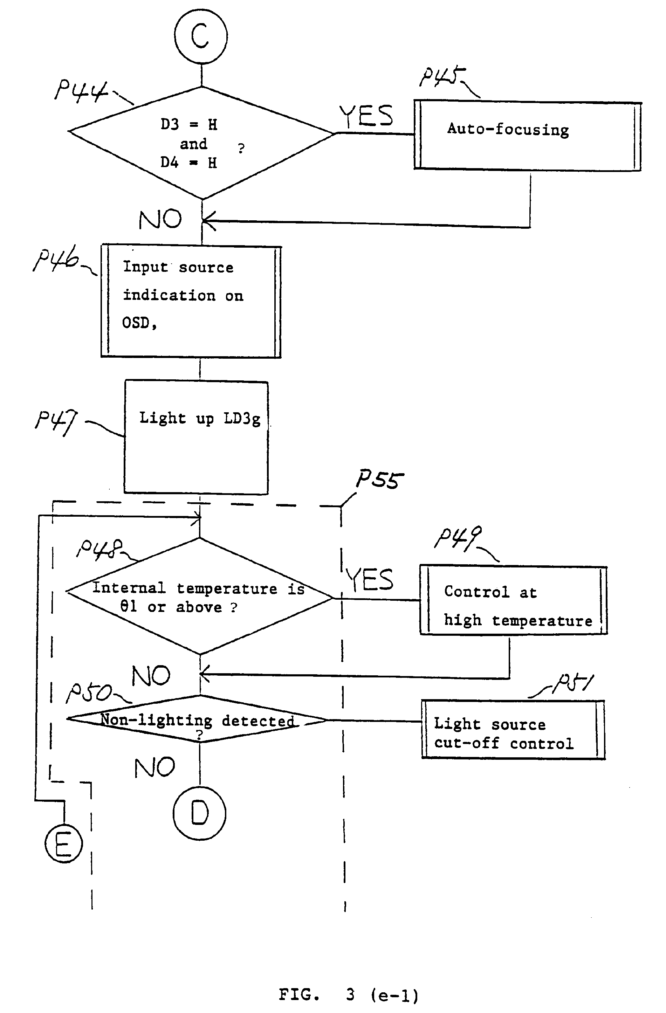

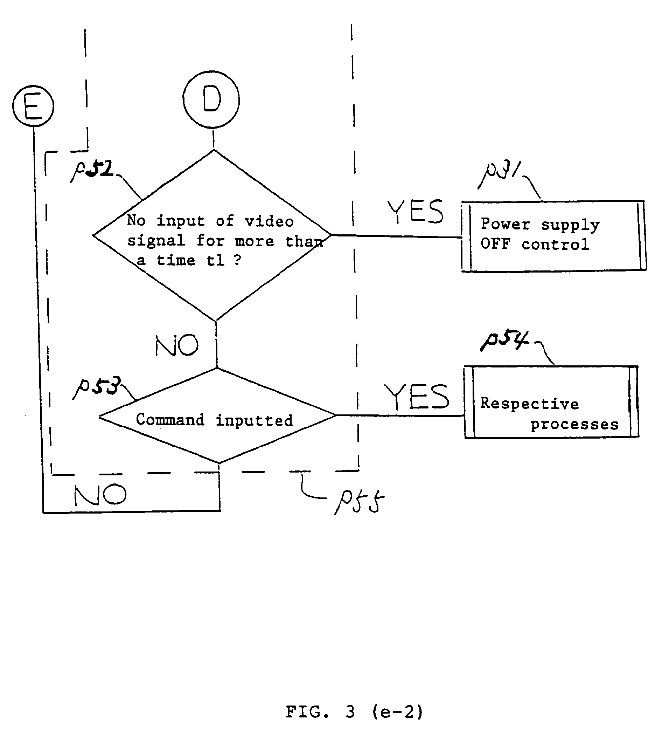

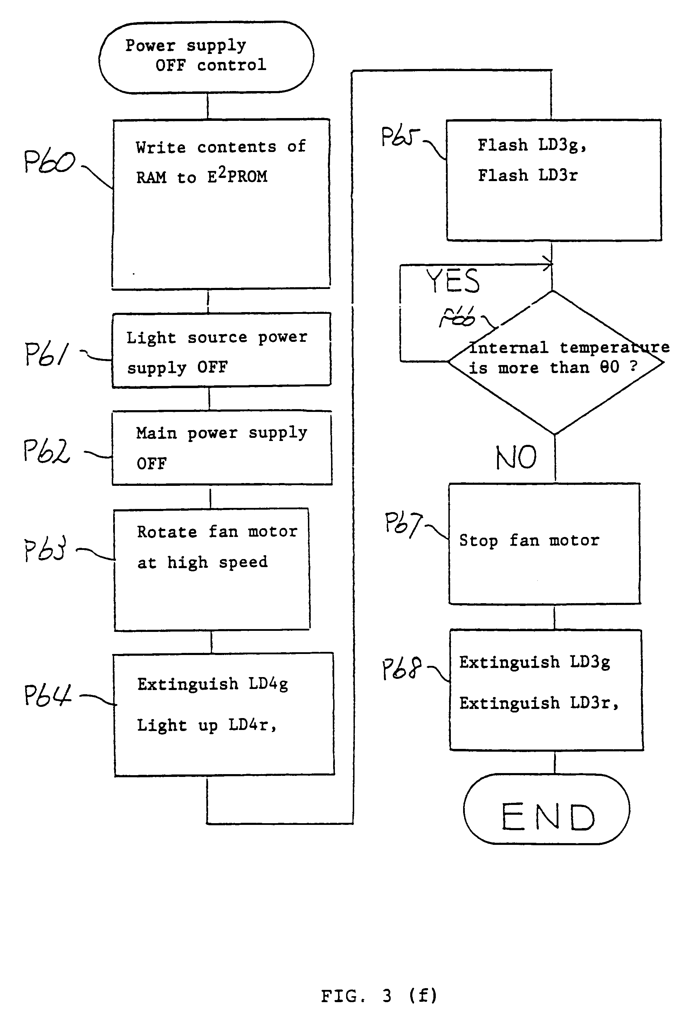

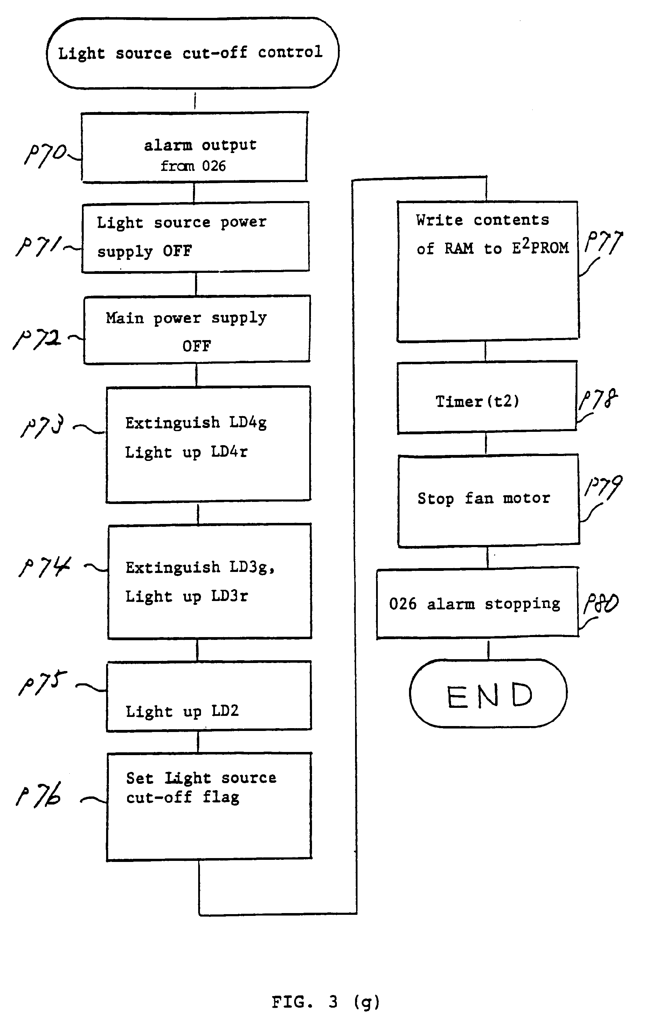

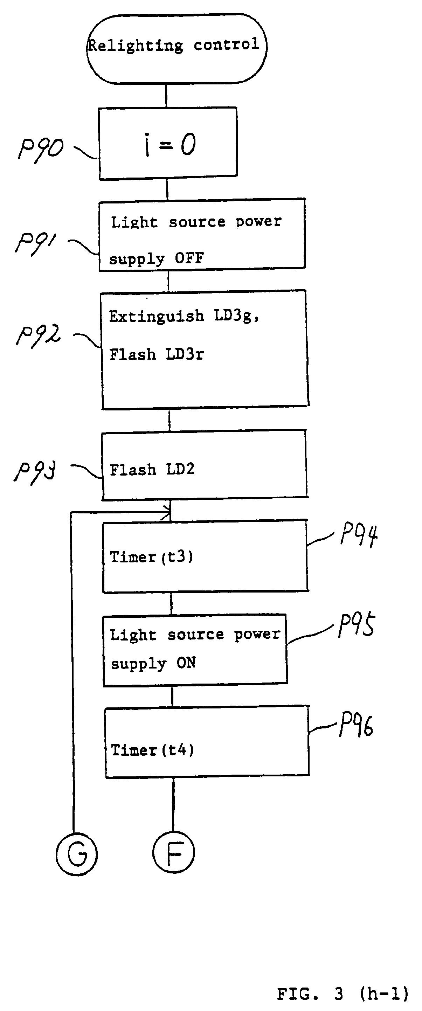

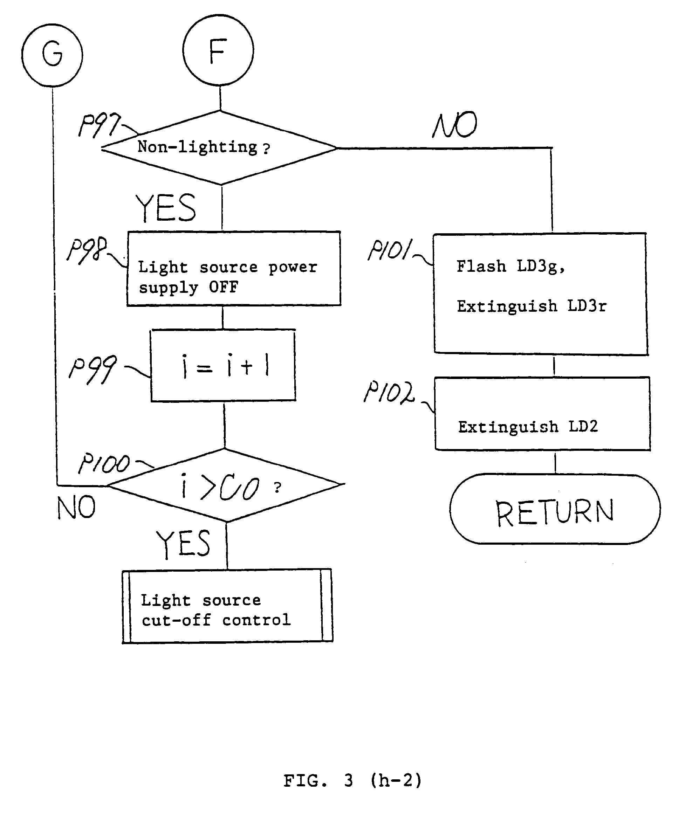

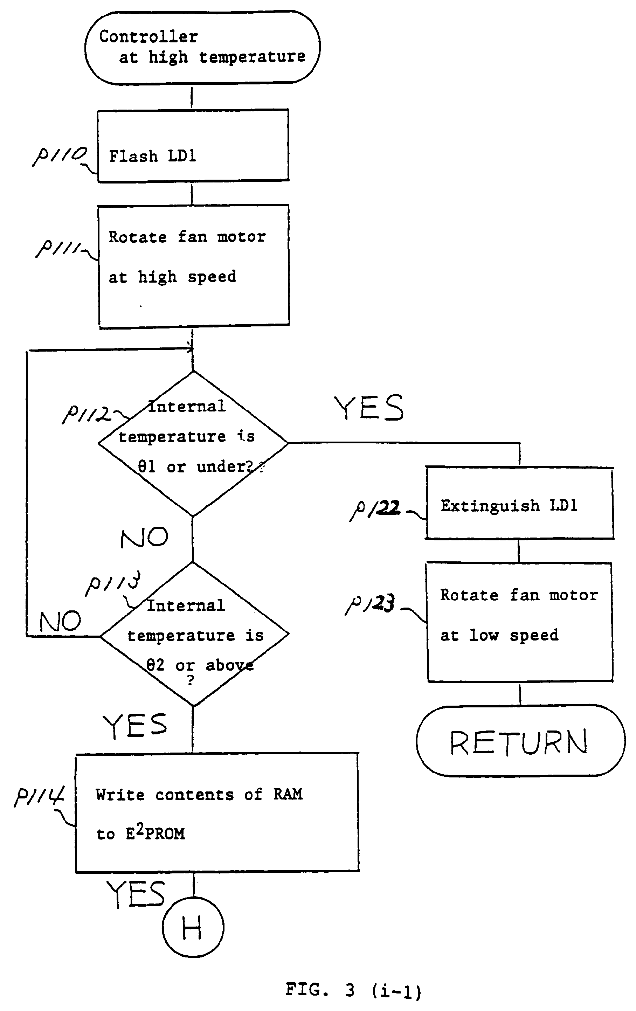

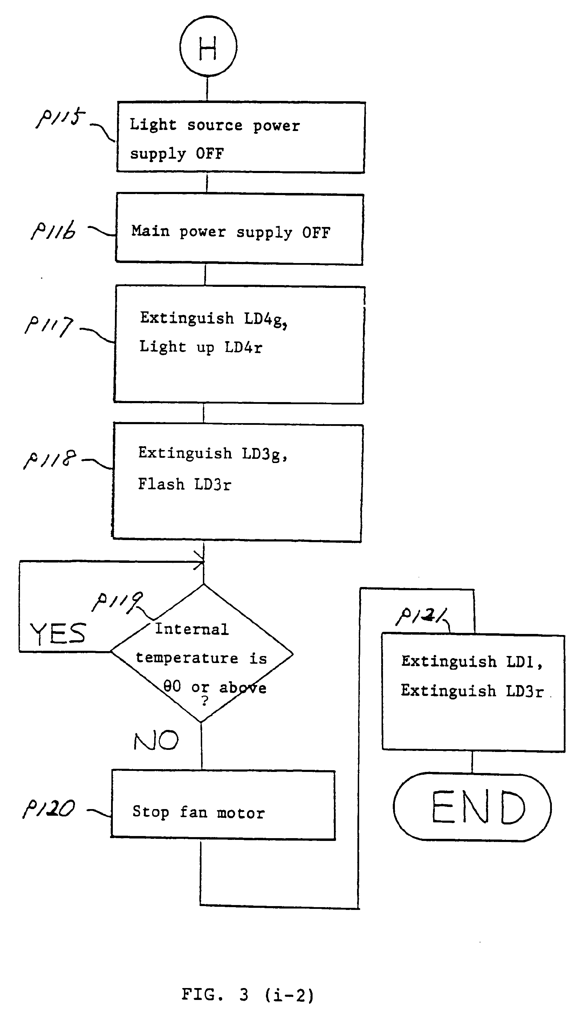

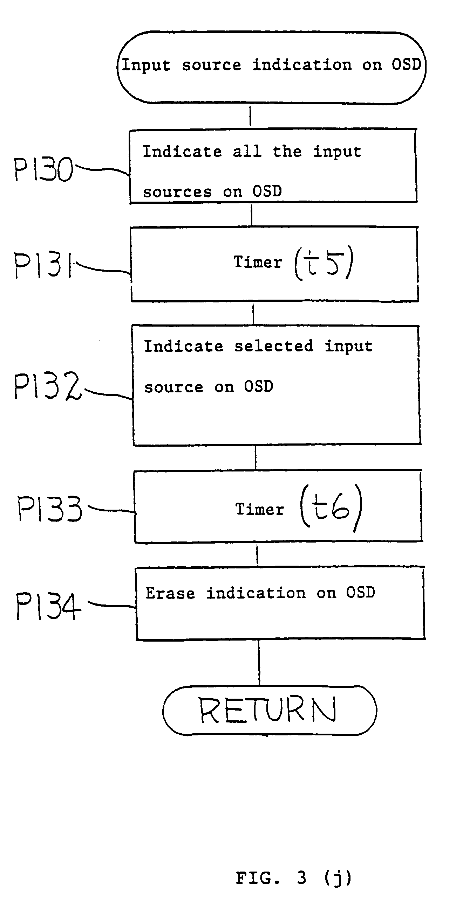

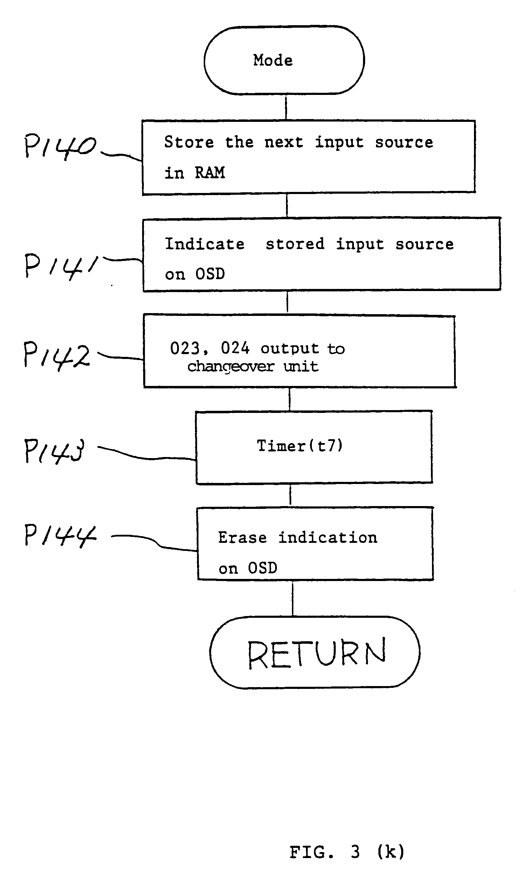

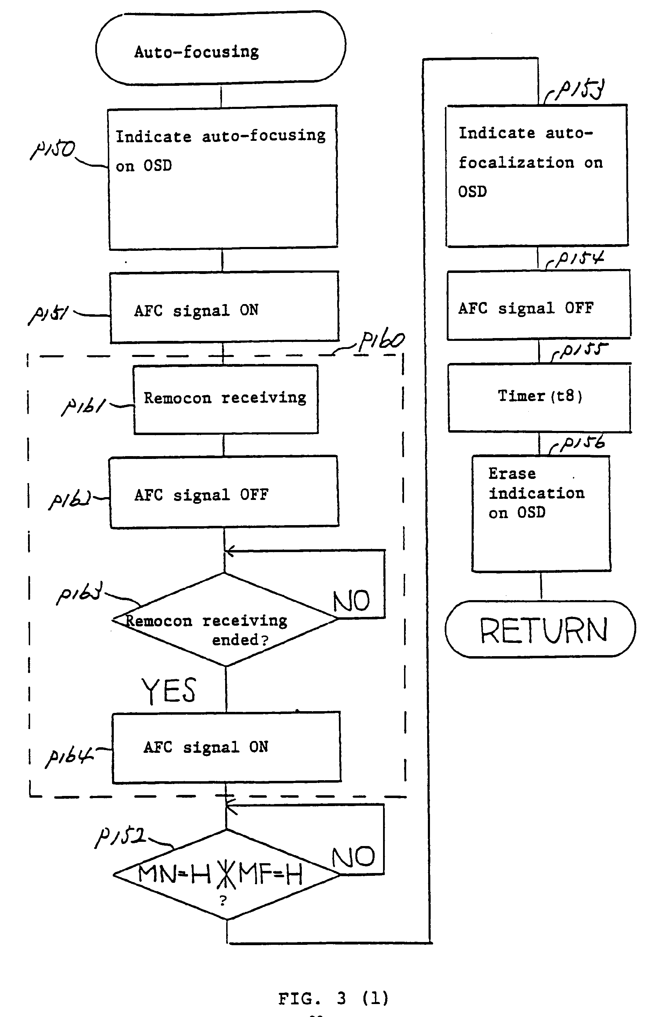

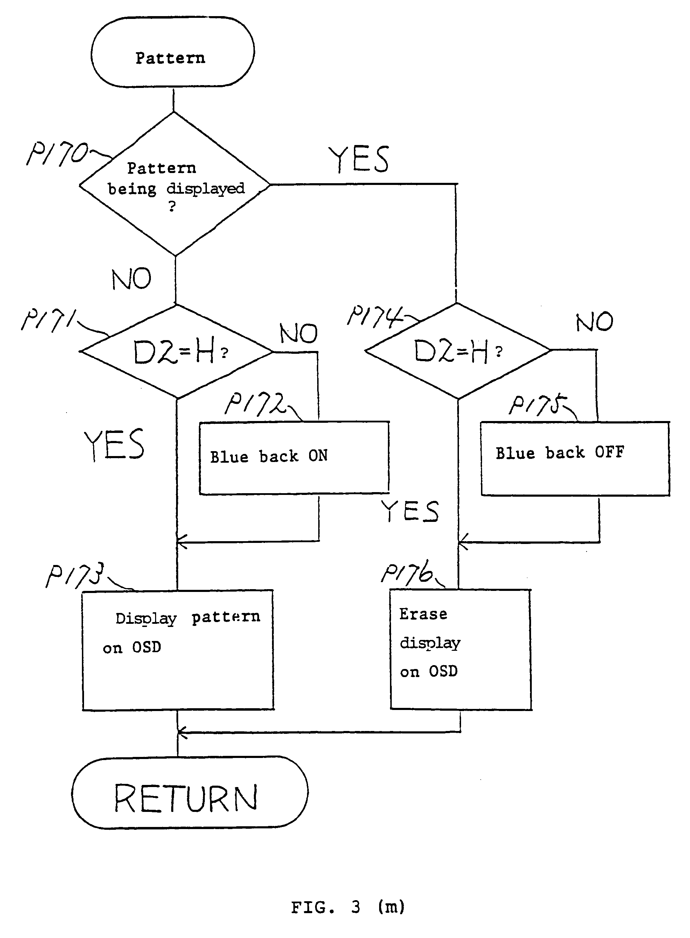

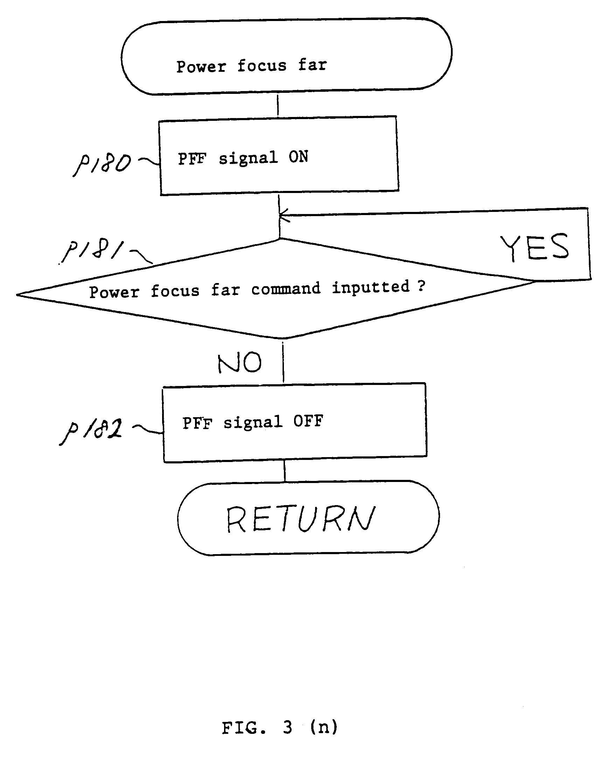

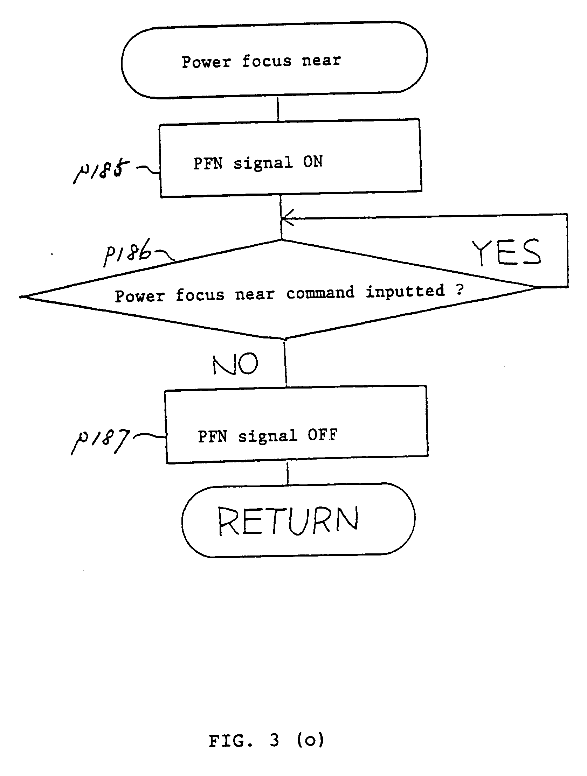

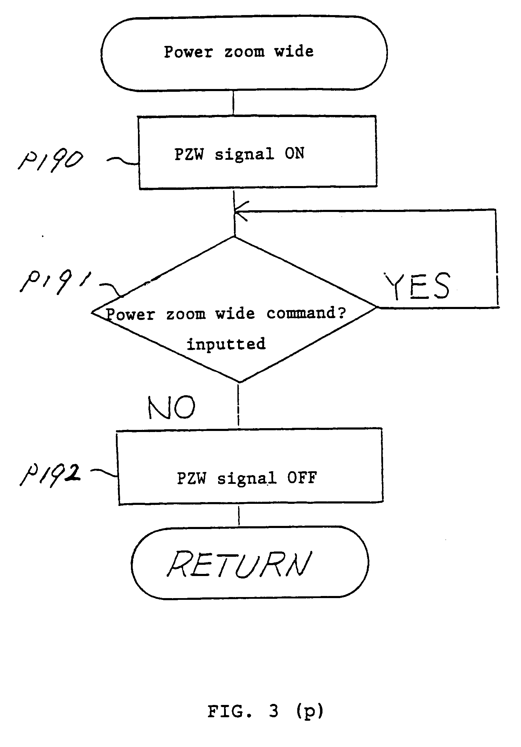

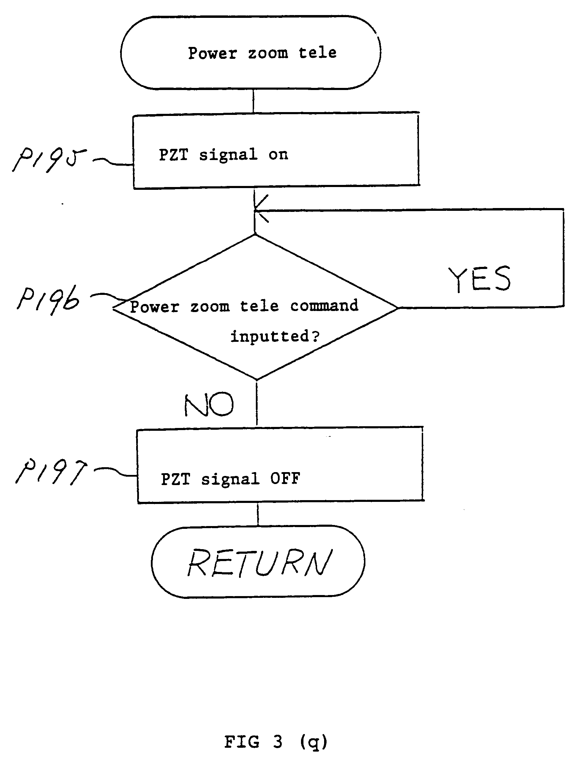

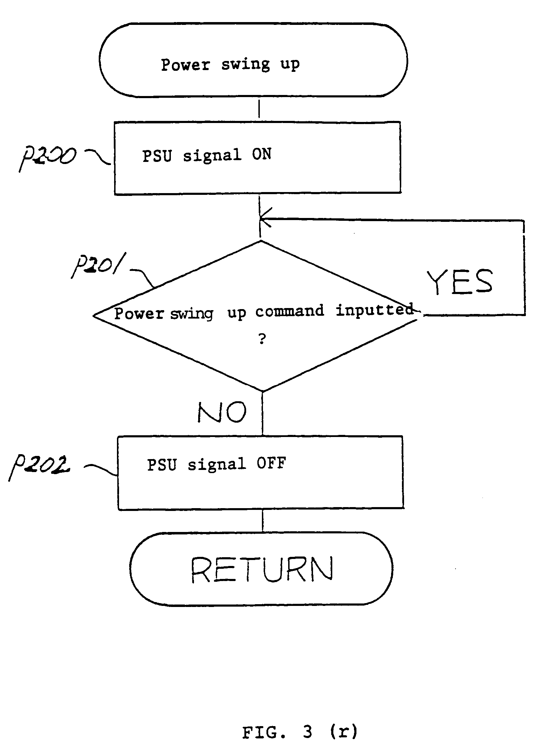

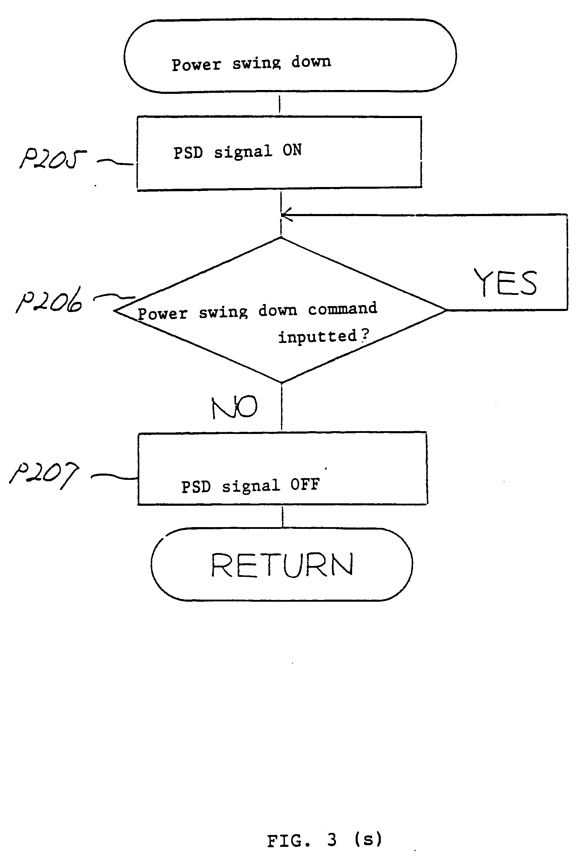

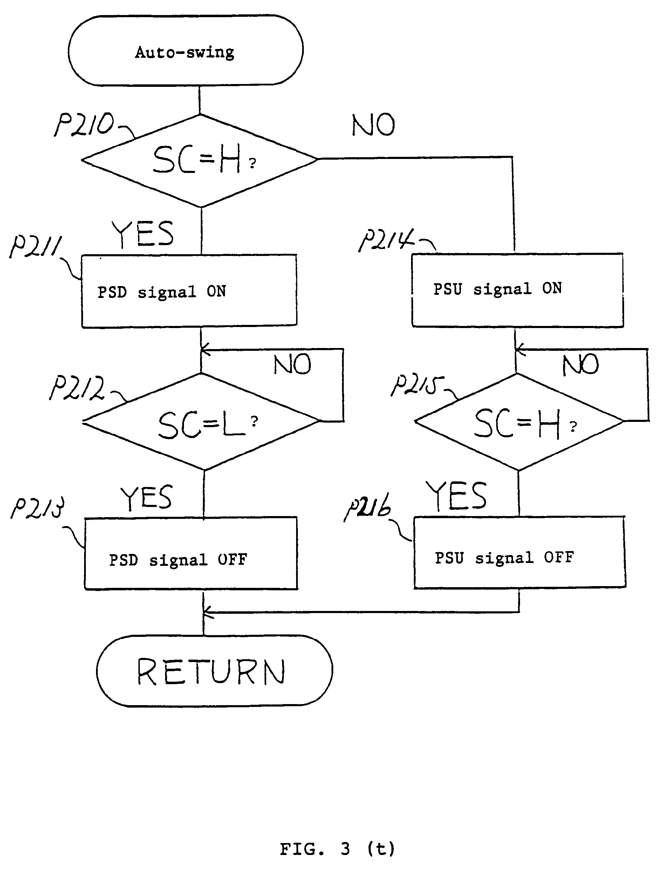

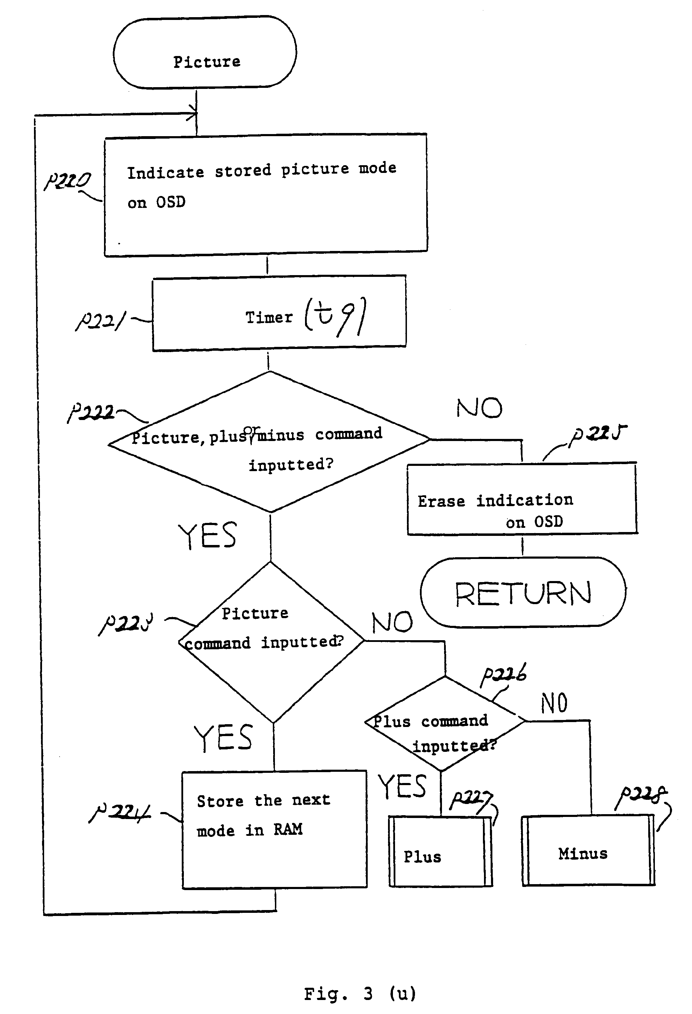

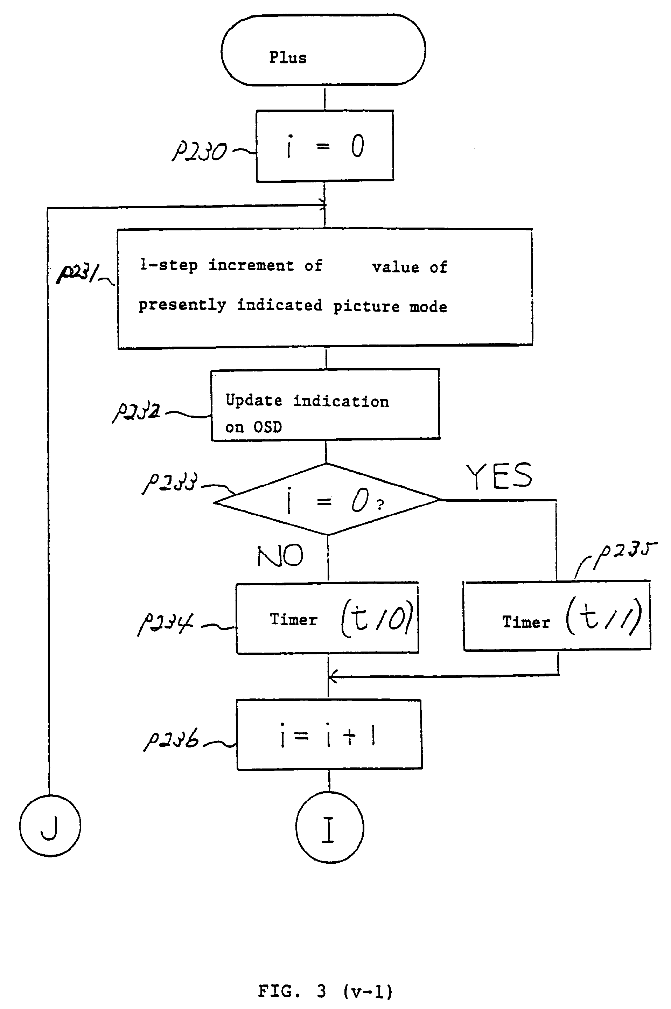

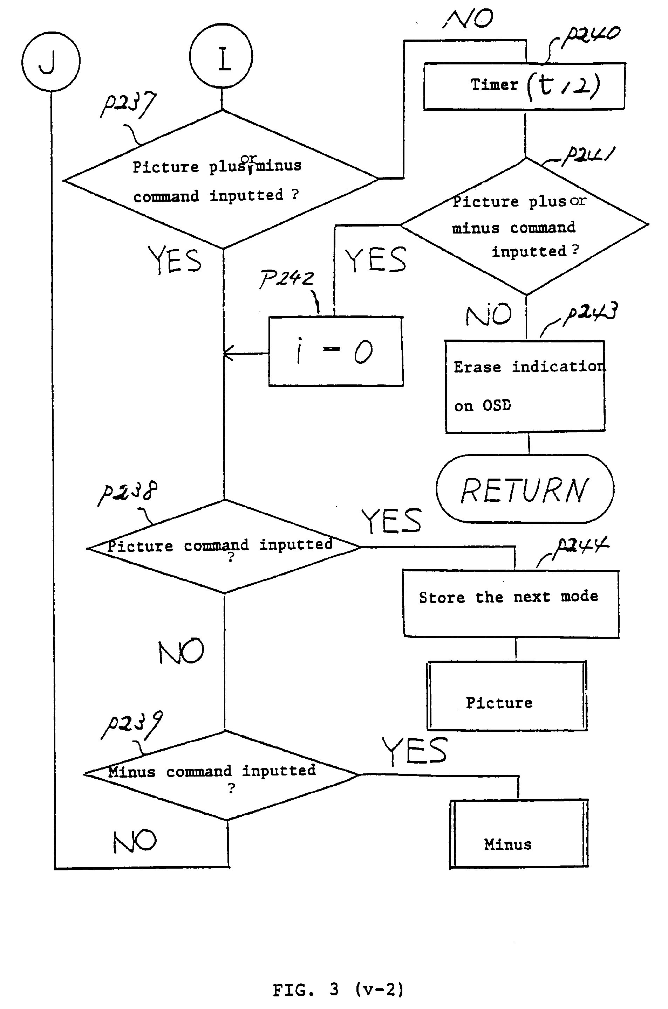

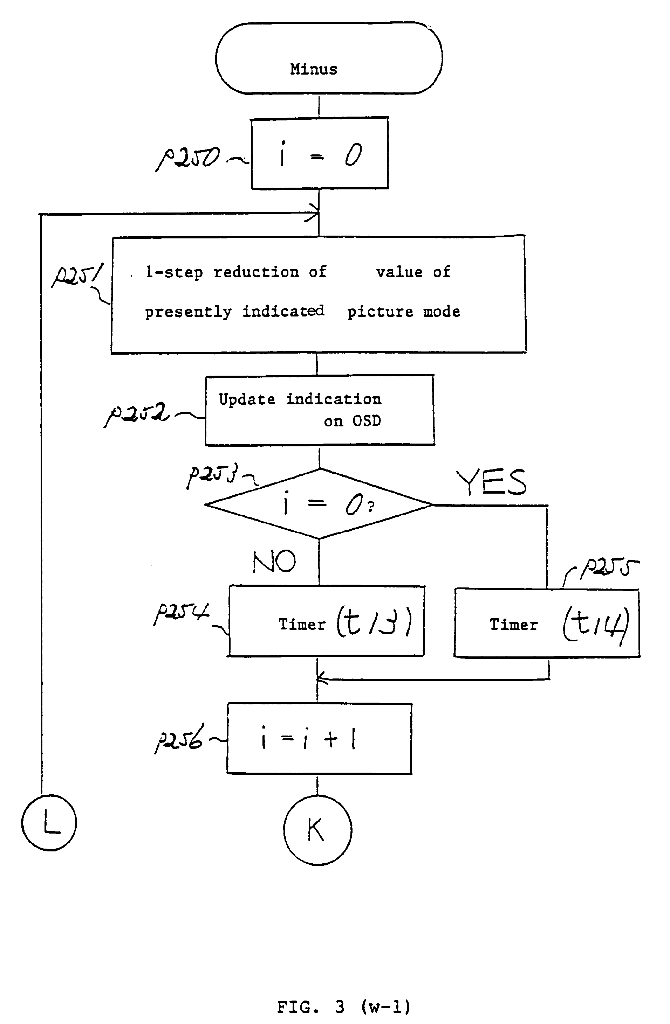

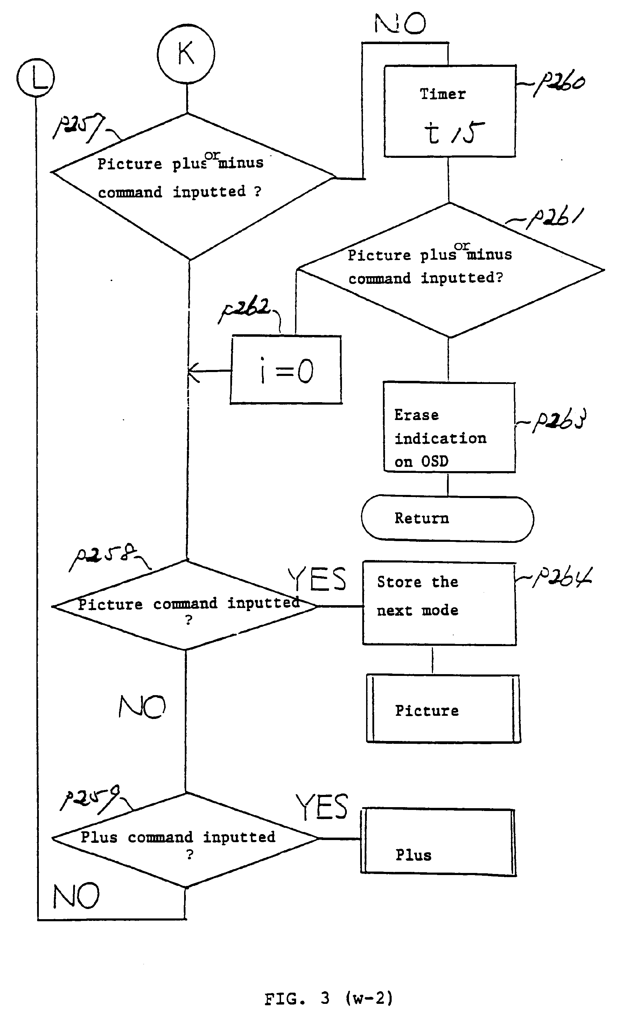

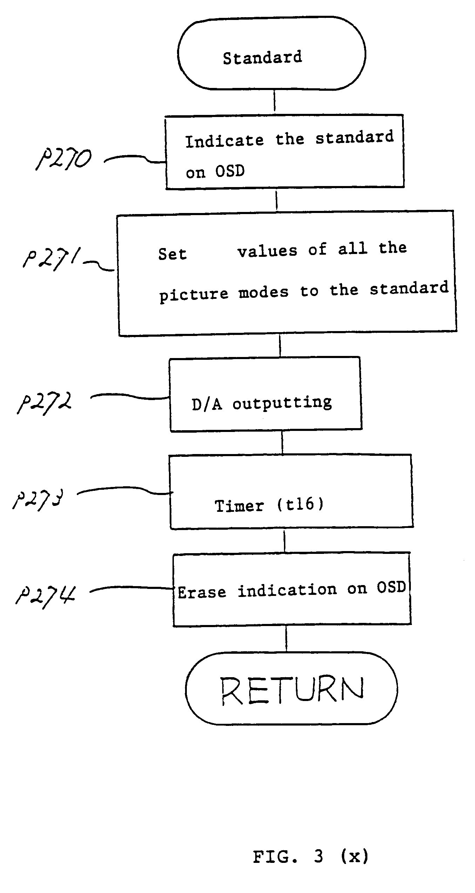

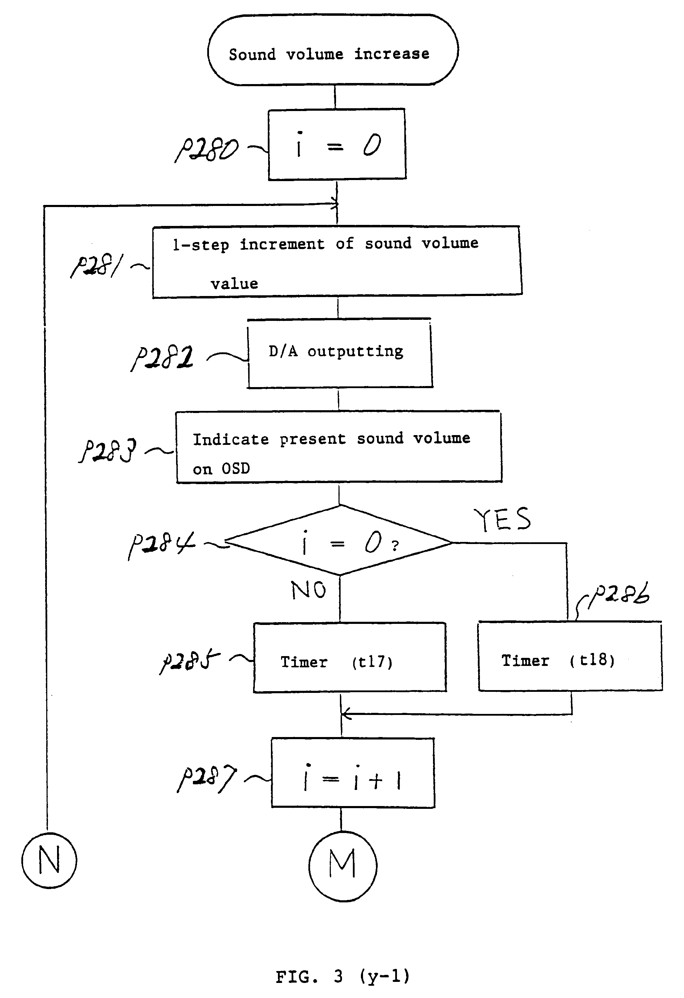

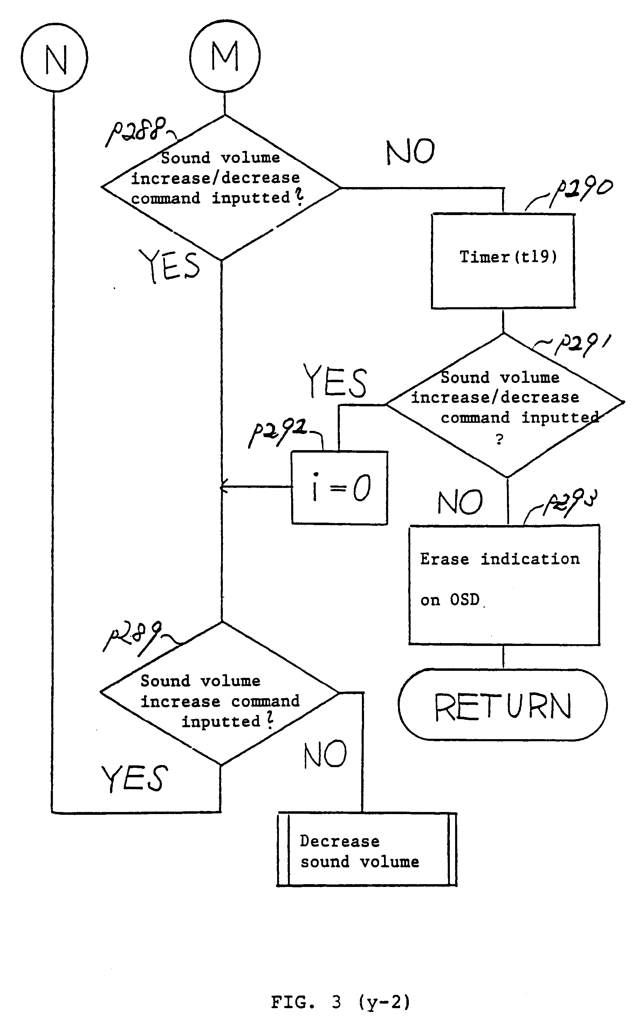

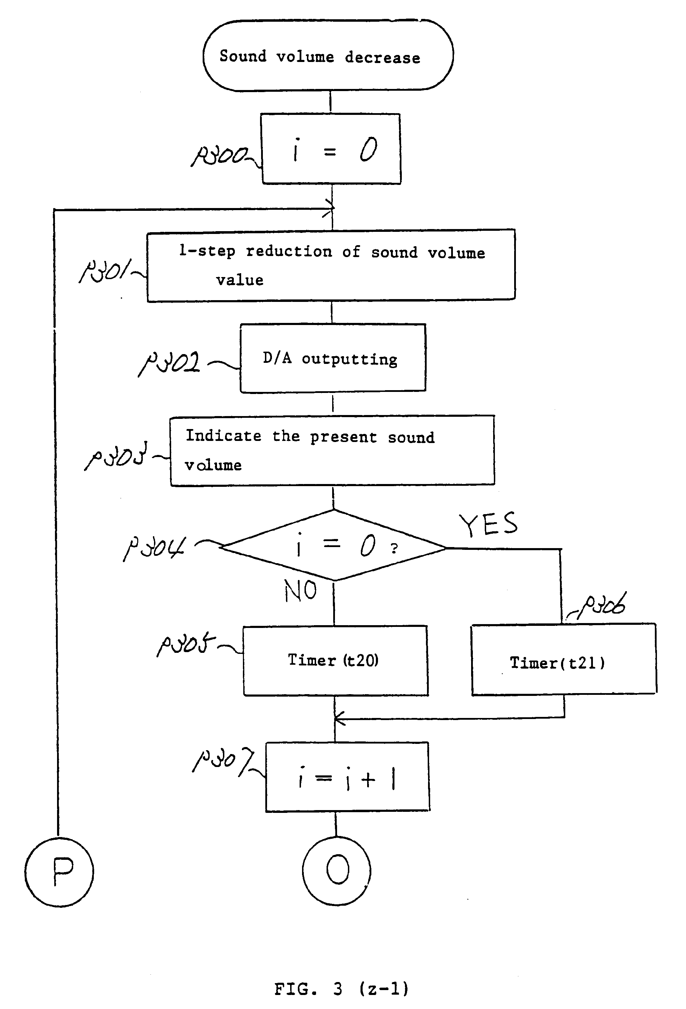

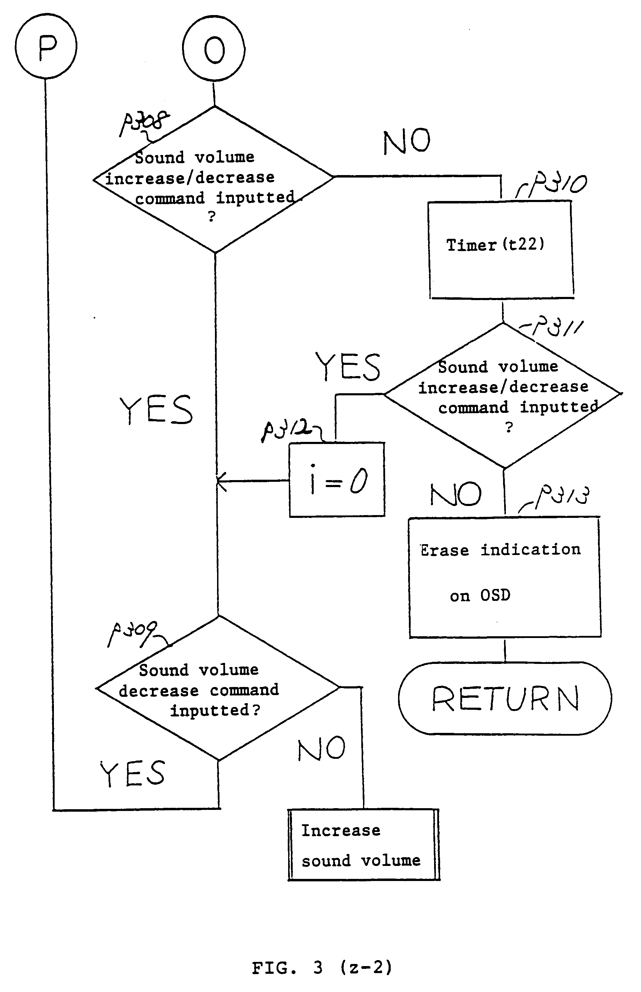

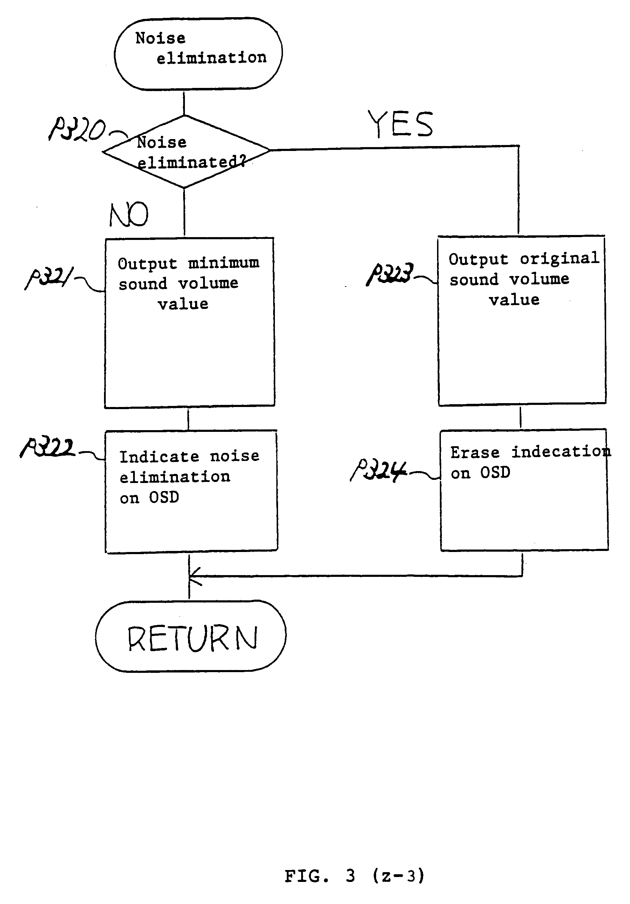

A control program for the above embodiment will be explained hereinafter with reference to Figs. 2(a) to 2(f) and the flowcharts of Figs 3(a) to 3(z). Note that in the description of the flowcharts the symbols P1, P2, ... represent the numbers of processing procedures (steps).

Fig. 3(a) is a flowchart schematically showing main processes of the program.

Immediately after the start the individual ports of the I/O port 100d are set in a stand-by status at a step P1. Subsequent to this step, the data of the E²PROM 250 are read and stored in a constant area of the RAM 100c at P2. The data containing set values for the D/A converter 270 and light source cut-off information are employed in the subsequent processing procedures. Then, statuses of the command switches D1 through D8 are read (P10-P25) and stored in the constant area of the RAM 100c at P3. The subsequent operations are determined depending on the statuses of the command switches D1-D8. For instance, if the command switch D1 is off indications given by means of the OSD 280 are in Japanese, whereas they are in English if the command switch D1 is on. It follows that the fundamental operating statuses of the control module 100 are developed in the RAM 100c as flags by the above described processing procedures.

Next, the power supply lamp LD4r is lit up at P indicating that the control module is in the stand-by status. The control module 100 remains in the stand-by status until a power supply command is inputted from a command switch or the remocon light receiver 200 at P5. When the power supply command is detected at P5, the operation enters into a power supply control process at P6. When the power supply has been normally turned on, a command inputted at P7 will be judged by the respective processes at P8 and the operation than moves to the individual processing procedures.

The control over the power supply will next be described. Referring to Figs 3(d) and 3(e), the judgment as to whether a power supply command represents an on or off state of the power supply is made at P30. When the power supply command instructs off state of the power supply, the process moves to a power off control. When the power supply command instructs power on, the light source cut-off flag in the RAM 100c is checked at P32. If the flag is on the process shifts to a light source cut-off control at P33. However, if the flag is off the power supply display lamp LD4g is lit up at P34, and the colour of the power supply display lamp LD4 is green indicating the operating status. The main power supply 300 is turned on at P35 and the components other then the light source start functioning. The light source operation lamp LD3g starts flashing in green indicating that the light source is warming up (P36). The fan motor 245 starts rotating at said lower speed (P37) and the light source power supply control unit 221 is switched on at P38 to thereby initiate the lighting operation of the projection light source. Subsequently, after a time t1 determined by a timer has passed (P39) the output of the non-lighting detector 210 is examined at P40. If non-lighting of the protection light source is detected, the process moves to relighting control (P41). When the projection light source is lit up, a count-down indication by means of the OSD 280 continues to be effected for 60 seconds (P42). This is a wait period until the light quantity emitted by the projection light source has assumed a prescribed value. In the meantime contents of the RAM 100c which include picture information, i.e., on hue and color density, add voice information, viz. on sound volume, are outputted to the D/A converter 270 at P43. After the process P43 has been completed, the status of the command switches D3 and D4 is checked at P44. If both command switches are off, this means a mode (P20) to perform auto-focusing when the power supply is turned on. Hence, the auto-focusing process is effected at P45. Next, an indication of the present input source is carried out at P46 and the light source operation lamp LD3g is lit up in green at P47 indicating normal lighting of the projection light source. From this step onward the fact that an internal temperature of the LVP exceeds Θ1 is detected from the output of the temperature detector 211 at P48 by the interrupt process P55. If the internal temperature exceeds Θ1 the operation moves to a high temperature control P49. When a drop-out of the projection light source is detected at P50 from the output of the non-lighting detector 210 the operation shifts to a light source cut-off control P51. If there is no video signal input for a given time t1 during the operation of the LVP, the control moves to a power supply off process P31. A command judgment is made at P54 after a command has been input at P53, and the control moves to the respective process.

Fig. 3(f) is a flowchart of the power supply off control procedure. When a power supply off command is input from the power switch S1 or the remocon light receiver 200 flag contents within the RAM 100c are written to the E²PROM 250 at P60. The light source power supply 301 is switched off at P61 and the main power supply 300 is switched off at P62. The fan motor 245 is made to rotate at the above mentioned higher speed (P63) to increase the quantity of moved air. The power supply display lamp LD4r is lit up turning the lamp LD4 to emit red light representing the stand-by status (P64). The light source operation lamp LD3 flashes in orange to indicate that the light source is, being cooled down (P65). The fact that the internal temperature of the LVP drops down to Θ0 or below is detected from the output of the temperature detector 211 at P66. At this time, the fan motor 245 is stopped (P67) and the light source operation lamp LD3 is extinguished (P68), thus coming to the stand-by status.

Fig. 3(g) is a flowchart of the light source cut-off control procedure. When a drop-out of the projection light source is detected from the output of the non-lighting detector 210, an alarm signal is output from the output port O26 at P70. Subsequently, the light source power supply 301 is turned off at P71, while the main power supply 300 is switched off at P72. The power supply display lamp LD4 is lit up in red (stand-by status) (P73) while the light source operation lamp LD3 is lit up in red (representing a cut-off of the light source operation) (P74). Then the light source life-span lamp LD2 is lit up (P75) to show a deterioration of the light source. Thereafter, a light source cut-off flag in the RAM 100c is set (P76) and the contents of a group of flags in the RAM 100c are written to the E²PROM 250 (P77). After a wait time t2 determined by a timer (P78) the fan motor 245 is stopped at P79. The alarm that has been outputted from the output port O26 is stopped at P80. The light source cut-off flag can be reset by applying an L level input to the input port I16 by turning on the switch RS1 (Fig. 2(b)).

Fig. 3(h) is a flowchart showing the relighting control which is effected when non-lighting of the projection light source is detected by the output of the non-lighting detector 210 after switching-on of the power supply. A counter is cleared at P90, and the light source power supply 301 is switched off at P91. The light source operation lamp LD3 flashes in red. The light source life-span lamp LD2 also flashes to indicate that the relighting control is being effected. The process is then halted until a wait time t3 determined by a timer has expired at P94. The lighting operation is executed once again (P95-P96). If after that lighting is confirmed at P97, the light source operation lamp LD3 flashes in green (P101), whereas the light source life-span lamp LD2 is extinguished (P102). The control reverts to the normal operation. When detecting non-lighting at P97, the light source power supply 301 is switched off (P98). The counter is incremented by 1 (P99), and the relighting operation is repeated up to the CO-th operation (P94-P100). In the case of non-lighting after the relighting operation has been effected CO times at P100, indicating that the light source is consumed up, the process moves to the light source cut-off control.

Fig. 3(i) is a flowchart showing the high temperature control. If the output of the temperature detector 211 indicates during the normal operation that the internal temperature of the LVP reached Θ1 or more, the temperature alarm lamp flashes at P110 to show that the temperature has increased. The fan motor 245 is made to rotate at a high speed at P111. This state continues till the internal temperature of the LVP reaches less than Θ1 at P112. When the internal temperature of the LVP decreased to below Θ1, the temperature alarm lamp LD1 is extinguished. The fan motor 245 is made to rotate at the low speed. The control is returned to the normal operation (P122-P123). If the internal temperature of the LVP continues to rise over Θ2, the flag contents in the RAM 100c are written to the E²PROM 250 (P114). All the power supplies are switched off (P115-P116). The power supply display lamp LD4 is lit up in red (stand-by status). The light source operation lamp LD3 flashes in red (abnormal status) (P117-P118). The cooling operation continues to be carried out till the internal temperature of the LVP is down to Θ0 or less at P119. Then the rotation of the fan motor 245 is stopped at P120. Subsequently, the temperature alarm lamp LD1 and the light source operation lamp LD3 are extinguished (P121) and the normal stand-by status is thus assumed.

Fig. 3(j) is a flowchart showing the input source indications by means of the OSD when the power supply is turned on. To start with, all the input sources are displayed on the screen of the OSD at P130. In accordance with this embodiment, videos 1 and 2 and options are displayed. Options 1 through 3 (P22-P25) are displayed depending on the statuses of option switches D7 and D8. Where no option is present, however, the options are not displayed. Subsequent to this step, after a wait time t5 has expired (P131), the selected input source is displayed (P132). After the expiration a further wait time t6 (P133), the representation by means of the OSD is erased (P134).

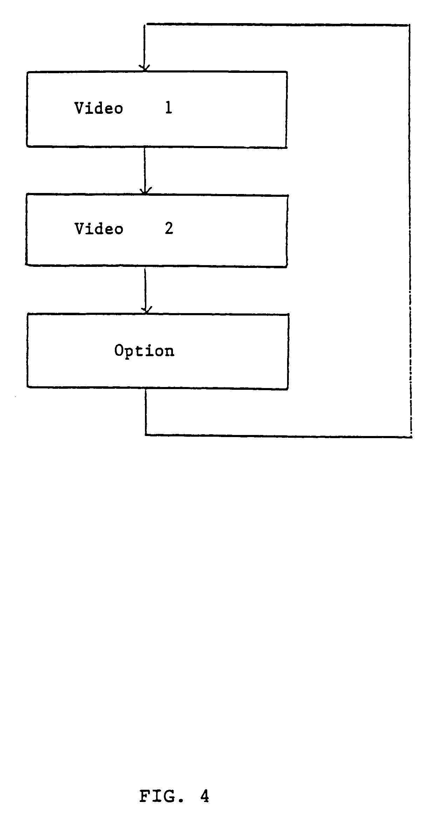

Fig. 3(k) is a flowchart illustrating the control for changing over an input mode when inputting a mode changeover command from the mode switch S3 or the remocon light receiver 200. When a command is inputted, there is set an input source next to the input source which is presently selected in the flag of the RAM 100c (P140). A name of the set input source is indicated by means of the OSD at P141 and in the RAM 100c at P140. Subsequently, a selection signal of the selected input source is outputted from the output ports O23 and O24 to the input changeover unit 230 (P142). After expiration of a wait time t7 (P143), the representation by means of the OSD is erased (P144). It should be noted that the input source is changed over every time the mode selecting command is inputted, as illustrated in Fig. 4, in the sequence of video 1 → video → 2 options → ...

Fig. 3(1) is a flowchart showing the auto-focus process. When inputting an auto-focus command from an auto-focus switch S15 or the remocon light receiver 200, the fact that auto-focusing is being executed is displayed by means of the OSD (P150). Next, an AFC signal is turned on at P151. If both an MN signal and an MF signal assume the H level at P152, this implies that the focalization is attained (P152). Hence, the indication by means of the OSD is changed into a representation of auto-focalization. Then, the AFC signal is turned off (P154). After a wait time t8 (P155), the representation by means of the OSD is erased (P156). After the AFC signal was turned on at P151, when an input from the remocon light receiver 200 is given during auto-focusing (P161), the AFC signal is turned off (P162), and there is a wait till an input of a remocon signal disappears (P163). The AFC signal is turned on once again (P164), and auto-focusing continues. Note that the steps from P161 to P164 are executed as an interrupt process (P160). If the command switches D3 and D4 are off and on, respectively, (P18, P21), the interrupt process of P160 is executed during an auto-focus constant operation, if a receiver for instance an infrared receiver used for focusing receives a remocon signal beam. Influences on autofocusing by remocon signal beams are thereby reduced.

Referring to Fig. 3(m), when inputting a pattern command from a pattern switch S6 or the remocon light receiver 200, a pattern serving as a criterion for focalization is displayed on the screen of the OSD or erased therefrom. Where no pattern is presently displayed at P170, the blue back signal transmitted from the output port O25 is turned on (P172) if the command switch D2 (*assumes the L level) is off (P15) at P171. Then, the pattern is displayed by means of the OSD at P173. If the pattern is presently displayed at P170, the blue-back-off is effected at P174 and P175 and the pattern on the screen is erased at P176.

Fig. 3 (n) is a flowchart illustrating the power focus-far-side process. When inputting a power focus-far-command from the command switch S7 or the remocon light receiver 200, a PFF signal (output port O17) is turned on while the command is being inputted (P180-P182). Consequently, a far-point focalization by the lens is attained.

Fig. 3(o) is a flow chart showing a power focus-near-side process. During inputting of a power focus-near-command from the command switch S8 or the remocon light receiver 200, a PFN signal (output port O18) is turned on (P185-P187), with the result that a near-point focalization by the lens is fulfilled.

Fig. 3(p) is a flowchart illustrating a power zoom-wide-side process. While a power zoom-wide command is inputted from the command switch S13 or the remocon light receiver 200, a PZW signal (output port O19) is turned on (P190-P192), thereby enlarging the picture size on the projection screen.

Fig. 3(q) is a flowchart showing a power zoom-tele side process. While a power zoom-tele-command is inputted from the command switch S14 or the remocon light receiver 200, a PZT signal (output port O20) is turned on (P195-P197), thereby diminishing the picture size on the projection screen.

Fig. 3(r) is a flowchart showing a power swing-up-side process. The projection image is shifted upwards by this process. During inputting of a power swing-up command from the command switch S16 or the remocon light receiver 200, a PSU signal (output port O21) is turned on (P200-P202).

Fig. 3(s) is a flowchart showing a power swing-down-side process. The projection image is shifted downwards by this process. While a power swing-down command is inputted from the command switch S17 or the remocon light receiver 200, a PSD signal (output port O22) is turned on (P205-P207).

Fig. 3(t) is a flowchart showing an auto-swing process. This process serves to automatically return the projection image shifted by the power swing-up or swing-down command to a non-shifted state. In the case of inputting an auto-swing command from the command switch S18 or the remocon light receiver 200, the projection image is turned upwards if a central position signal SC (input port I13) of the lens has the H level at 210. Hence, the PSD signal is kept on (P211-P213) till the signal SC becomes the L level. If the signal SC assumes the L level at 210, the image is turned downwards, so that the PSU signal is kept on till the signal SC reaches the H level (P214-P216).

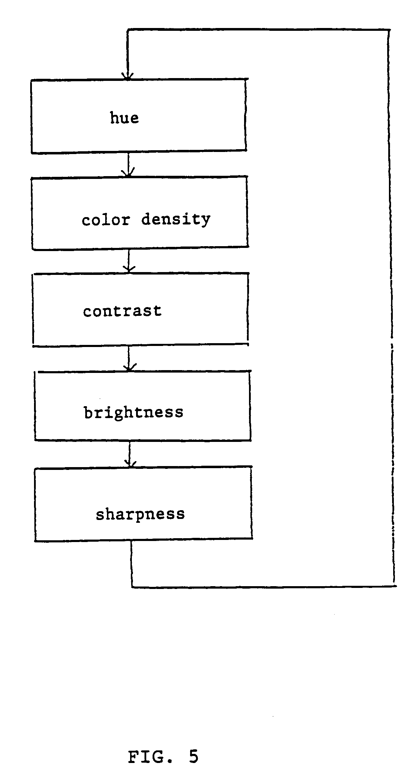

Fig. 3(u) is a flowchart illustrating a process to select adjustment items during an adjustment of picture quality. When inputting a picture command from the command switch S12 or the remocon light receiver 200, a picture mode presently stored in the flag within the RAM 100c and its picture quality D/A converter value are displayed on the screen of the OSD. After lapse of a wait time t9 (P221), if there has been no inputting of a picture command or a plus command (hereinafter described) or a minus command (hereinafter described) (P222), the information displayed by means of the OSD is erased at P225. In the case of inputting any one of these three commands at P222 during the wait time t9 at P221, there is made a judgment as to whether this is the picture command or not at P223. If not, whether it is the plus command or the minus command is judged at P226. The process moves to respective steps (P227, P228). If it proves to be the picture command at P223, the next picture mode is stored in the flag within the RAM 100c at P224, and the process returns to P220. Note that the picture mode is changed over each time the picture command is inputted in a sequence such as shown in Fig. 5, namely hue → color density → contrast → brightness → sharpness → ...

If no command relative to the adjustment of picture quality is inputted for a predetermined period of time (t9) in the manner described above, this process comes to and end.

Fig. 3(v) is a flowchart showing the process executed when the plus command is inputted from the command switch S10 or the remocon light receiver 200 in a picture quality adjustment mode selected status. A counter for counting the number of inputting operations of the command is reset at P230. The value of the presently selected picture mode as stored in RAM 100c and which is being displayed is incremented by one step (P231). The resultant value is outputted to the D/A converter 270. The picture quality Value displayed by means of the OSD is updated at P232. If the counter indicates 0, it is incremented by 1 after a time t11 has passed. If there is no input of a picture command, plus command or minus command (P233, P235, P236, P237), after a time t12 has passed at P240, a similar command check is executed once again at P241. If there is no command input, the representation by means of the OSD is erased at P243, and the control is returned. If there is any one of the aforementioned three command inputs at P241, the counter is reset at P242 and the control shifts to P238. If there is any one of the three command inputs at P237, whether this is a picture command input or not is judged at P238. If so, the next picture mode is stored in the flag within the RAM 100c. The control moves to the picture process. If the command input is a minus command (P239), the control shifts to the minus command process. If the command is neither a picture command nor a minus command up to P239, this implies that a plus command has been inputted once again. Hence, the processes goes back to P231. The time t10 at P234 is intended to constitute a sampling time when the commands are consecutively inputted. On the basis of the above, where, for instance, t11 is set to 1 s, t10 is set to 0.3 s and t12 is set to 3 s, and if the input of the plus command is within 1 s, a step input is present. Whereas if the plus command is beyond 1 s, continuous processing is effected on the assumption that approximately three inputs are present for every 1 s. If no inputs are present for 3 s or more, the picture quality mode is terminated.

Fig. 3(w) is a flowchart showing the process executed when the minus command is inputted from the command switch S9 or the remocon light receiver 200 in the picture quality adjustment mode selected status. A series of steps (P250-P264) starting from P250 are substantially the same as those (P230-P244) of the above described plus command. Different procedures are merely the 1-step reduction of the picture quality Value at P251 to output the reduced value to the D/A converter 270 and the judgment as to whether the command input is the plus command or not at P259. For example, a time t14 at P255 is set to 1 s, a time t13 at P254 is set to 0.3 s, and a time t15 at P260 is set to 3 s. In this case, if the input of the minus command is within 1 s, the step input is present. Whereas if the input exceeds 1 s, the continuous process is effected on the assumption that there are approximately three inputs for every 1 s. If no inputs are present for 3 s or more, the picture quality adjustment mode is terminated.

Fig. 3(x) is a flowchart showing a process for setting, to the standard values, the picture quality values in RAM 100c of all the picture modes of the picture quality adjustment mode. When inputting a standard command from the command switch S11 or the remocon light receiver 200, an indication of being the standard value of the screen is effected by means of the OSD at P270. The picture quality values of all the picture modes in the RAM 100c are set to their respective standard value at P271. Note that these standard values are previously stored in the ROM 100b. The values, set herein, of all the picture modes are outputted to the D/A converter 270 (P272). After lapse of a time t16, the representation by means of the OSD is erased (P273, P274).

Fig. 3(y) is a flowchart showing a process to increase the sound volume by the sound volume adjustment. When inputting a sound increase command from the command switch S5 or the remocon light receiver 200, the counter for counting the number of command inputs is reset at P280. A sound volume Value in the RAM 100c is incremented by 1 step. The incremented sound volume Value is outputted to the D/A converter 270 at P282. The present sound volume is outputted to the screen of the OSD at P283. If the command is the first at P284, the counter is incremented by 1 step (P287) after lapse of a time t18 at P286. Whether there is inputted a sound increase or decrease command is judged at P288. If there is no input even after lapse of a time t19 (P290), the representation by means of the OSD is erased (P291, P293). If there exists any one of the two command inputs at P291, the counter is reset at P292. The process is moved back to P289. If there is an input of any one of the two commands at P288, and if this input is not the sound increase command at P289, the control shifts to a process (hereinafter described) to decrease the sound volume. If the input is the sound increase command at P289, the process returns to P281. The sound volume Value is incremented by one step during a continued input of the sound increase command for every lapse of the time t17. For example, the time t18 at P286 is set 1 s, the time t17 at P285 is set to 0.3 s, and the time P290 is set to 3 s. In this case, if the input of the sound increase command is within 1 s, the step input is present. Whereas if the input exceeds 1 s, the continuation process is carried out on the assumption that approximately three inputs are present per 1 s. If there is no sound increase or decrease command for 3 s or more, the sound volume adjustment comes to an end.

Fig. 3(z) is a flowchart showing a process to decrease the sound volume by the sound volume adjustment. When inputting the sound decrease command from the command switch 54 or the remocon light receiver 200, a series of steps (P300-P313) starting from P300 are substantially the same as those (P280-P239) of the above mentioned sound volume increase command. Different procedures are merely the 1-step increment of the sound volume Value at P301 and the judgment of whether the input is the sound volume decrease command or not at P309. For instance, a time t21 at P306 is set to 1 s, a time t20 at P305 is set to 0.3 s, and a time t22 at P310 is set to 3 s. In this case, if the input of the sound volume decrease command is less than 1 s, the step input is present. Whereas if the input exceeds 1 s, the continuous process is effected on the assumption that approximately three inputs are present per 1 s. If there is no sound volume decrease or increase command input for more than 3 s, the sound volume adjustment is terminated.

Fig. 3(z-3) is a flowchart showing a process to muted noises by the sound volume adjustment. When inputting a noise muting command from the command switch S2 or the remocon light receiver 200, whether the noises are being now muted or not is judged at P320. If not, a minimum value of the sound volume is outputted to the D/A converter 270. An indication of noises being muted is effected on the screen of the OSD (P321, P322). If the sounds are being muted at P320, an original sound volume Value of the D/A converter 270 is outputted, and the indication of the noises being muted by means of the OSD is erased.

### Effects of the invention

As discussed above, according to the present invention, the respective units and detectors which constitute the liquid crystal video projector are unitarily controlled. The operating status is held in the memory even when the electric power supply to the liquid crystal video projector is cut off. The user is therefore capable of easily grasping the operating status of the liquid crystal video projector. Besides, it is possible to readily attain the operation under the remote control and the automatization thereof, thereby improving the operability.

## Claims

1. A liquid crystal video projector comprising:
an input unit (120) for inputting operating commands,
a non-lighting detector (210) for detecting non-lighting of a projection light source,
a temperature detector (211) for detecting the temperature within said liquid crystal video projector,
a variable-speed fan (245) for cooling of the liquid crystal video projector, the fan speed responsive to the said temperature detector such that a predetermined operating temperature is maintained,
display means (130) for displaying status information of the liquid crystal video projector,
alarm means (140) for giving alarm in case of a an abnormal status,
electric power supply means,
storage means (250) for storing status information of the liquid crystal video projector, and
command and status processing means (100) for controlling the projection light source, the variable speed fan, the display means and the alarm means on the basis of commands inputted from said input unit (120) and signals from said non-lighting detector (210) and said temperature detector (211).

2. A liquid crystal video projector according to claim 1, comprising:
input means (1) for detecting commands inputted by said input unit (120),
command discriminating means (2) for outputting a command signal after discriminating an operating status on the basis of an output from said input means (1),
non-lighting detection means (10) for outputting a projection light source non-lighting signal in response to a signal transmitted from said non-lighting detector (210),
temperature detection means (20) for outputting a temperature information signal in response to a signal transmitted from said temperature detector (211),
power supply control means (3) controlled on the basis of the command signal from said command discriminating means (2), said projection light source non-lighting signal and said temperature information signal,
a main power supply control unit (220) for effecting on/off control of electric power supply to a main power supply (300) in response to the output signal from said power supply control means (3),
a light source power supply control unit (221) for effecting on/off control of electric power supply to a light source power supply (301) in response to the output signal from said power supply control means (3),
fan motor (245) having a variable rotational speed, for cooling the interior of said liquid crystal video projector,
fan motor control means (8) for controlling the operation of said fan motor (245) on the basis of an output from said power supply control means (3),
a fan motor control unit (240) for controlling said fan motor (245) in response to an output signal from said fan motor control means (8),
alarm issuing means (30) for issuing an alarm signal on the basis of an output from said power supply control means (3),
an alarm unit (140) driven by the alarm signal from said alarm issuing means (30),
input changeover control means (4) for changing over an input signal source in accordance with the command signal from said command discriminating means (2),
an input changeover unit (230) controlled by an output signal from said input changeover control means (30),
picture processing means (5) for controlling a picture on the basis of said command signal from said command discriminating means (2),
voice processing means (6) for controlling the sound volume on the basis of said command signal from said command judging means (2),
a D/A converter (270) controlled by the output signals from said picture processing means (5) and said voice processing means (6),
lens control means (7) for controlling a projection lens mechanism on the basis of said command signal from said command judging means (2),
a lens control unit (260) for controlling said projection lens mechanism in accordance with an output signal from said lens control means (7),
a storage unit (250) for storing information dealt with by said power supply control means (3) said input changeover means (4), said picture processing means (5) and said voice processing means (6),
display control means (9) for controlling a display of an operating status of said liquid crystal video projector on the basis of outputs from said power supply control means (3), said input changeover means (4), said picture processor means (5), said voice processor means (6) and said lens control means (7),
a display unit (130) controlled by an output signal from said display control means (9) and
timer means (50) for effecting time control of said respective means.

3. The liquid crystal video projector according to claims 1 or 2, wherein said storage unit (250) is adapted to hold the stored data even if the electric power to said liquid crystal video projector is cut off.

4. The liquid crystal video projector according to claim 1, wherein said command and status processing means (100) is formed by a program controlled microcomputer.

5. The liquid crystal video projector according to any of the preceding claims, wherein said input unit (120) includes a remote control receiving means (200).

## Patentansprüche

1. Flüssigkristall-Videoprojektor, umfassend:
eine Eingabeeinheit (120) zur Eingabe von Betriebsbefehlen,
einen Lichtfehldetektor (210) zur Feststellung eines Nichtleuchtens einer Projektionslichtquelle,
einen Temperaturdetektor (211) zur Feststellung der Temperatur innerhalb des Flüssigkristall-Videoprojektors,
ein Gebläse (245) mit variabler Drehzahl zur Kühlung des Flüssigkristall-Videoprojektors, wobei die Gebläsedrehzahl auf den Temperaturdetektor derart reagiert, daß eine vorbestimmte Betriebstemperatur aufrechterhalten wird,
eine Anzeigeeinrichtung (130) zur Anzeige von Zustandsinformation des Flüssigkristall-Videoprojektors,
eine Alarmeinrichtung (140) zur Alarmgabe im Fall eines anomalen Zustands,
eine elektrische Stromversorgungseinrichtung,
eine Speichereinrichtung (250) zur Speicherung von Zustandsinformation des Flüssigkristall-Videoprojektors, und
eine Befehls- und Zustandsverarbeitungseinrichtung (100) zur Steuerung der Projektionslichtquelle, des Gebläses mit variabler Drehzahl, der Anzeigeeinrichtung und der Alarmeinrichtung auf der Basis von von der Eingabeeinheit (120) eingegebenen Befehle sowie Signalen von dem Lichtfehldetektor (210) und dem Temperaturdetektor (211).

2. Flüssigkristall-Videoprojektor nach Anspruch 1, umfassend:
eine Eingabeeinrichtung (1) zur Feststellung von Befehlen, die mittels der Eingabeeinheit (120) eingegeben wurden,
eine Befehls-Unterscheidungseinrichtung (2) zur Ausgabe eines Befehlssignals nach Unterscheidung eines Betriebszustandes auf der Basis eines Ausgangssignals von der Eingabeeinrichtung (1),
eine Lichtfehldetektoreinrichtung (10) zur Ausgabe eines Projektionslichtquellen-Nichtleuchtsignals als Antwort auf ein von dem Lichtfehldetektor (210) übertragenes Signal,
eine Temperaturdetektoreinrichtung (20) zur Ausgabe eines Temperaturinformationssignals als Antwort auf ein von dem Temperaturdetektor (211) übertragenes Signal,
eine Stromversorgungs-Steuereinrichtung (3), die auf der Basis des Befehlssignals von der Befehls-Unterscheidungseinrichtung (2), des Projektionslichtquellen-Nichtleuchtsignals und des Temperaturinformationssignals gesteuert wird,
eine Haupt-Stromversorgungs-Steuereinheit (220) zur Ausführung einer Ein-Aus-Steuerung der elektrischen Stromversorgung zu einer Haupt-Stromversorgung (300) als Antwort auf das Ausgangssignal der Stromversorgungs-Steuereinrichtung (3),
eine Lichtquellen-Stromversorgungs-Steuereinheit (221) zur Ausführung einer Ein-Aus-Steuerung der elektrischen Stromversorgung an eine Lichtquellen-Stromversorgung (301) als Antwort auf das Ausgangssignal der Stromversorgungs-Steuereinrichtung (3),
einen Gebläsemotor (245) mit variabler Drehzahl zur Kühlung des Inneren des Flüssigkristall-Videoprojektors,
eine Gebläsemotor-Steuereinrichtung (8) zur Steuerung des Betriebs des Gebläsemotors (245) auf der Basis eines Ausgangsignals von der Stromversorgungs-Steuereinrichtung (3),
eine Gebläsemotor-Steuereinheit (240) zur Steuerung des Gebläsemotors (245) als Antwort auf ein Ausgangssignal von der Gebläsemotor-Steuereinrichtung (8),
eine Alarmgabeeinrichtung (30) zur Ausgabe eines Alarmsignals auf der Basis eines Ausgangssignals von der Stromversorgungs-Steuereinrichtung (3),
eine Alarmeinheit (140), die von dem Alarmsignal von der Alarmgabeeinrichtung angesteuert wird,
eine Eingangsumschalt-Steuereinrichtung (4) zur Umschaltung einer Eingangssignalquelle nach Maßgabe des Befehlssignals von der Befehls-Unterscheidungseinrichtung (2),
eine Eingangsumschalteinheit (230), die von einem Ausgangssignal von der Eingangsumschalt-Steuereinrichtung (4) gesteuert wird,
eine Bildverarbeitungseinrichtung (5) zur Steuerung eines Bildes auf der Basis des Befehlssignals von der Befehls-Unterscheidungseinrichtung (2),
eine Sprachverarbeitungseinrichtung (6) zur Steuerung der Tonlautstärke auf der Basis des Befehlssignals von der Befehlsbeurteilungseinrichtung (2),
einen D/A-Umsetzer (270), der von dem Ausgangssignal von der Bildverarbeitungseinrichtung (5) und der Sprachverarbeitungseinrichtung (6) gesteuert wird,
eine Linsen-Steuereinrichtung (7) zur Steuerung eines Projektionslinsenmechanismus auf der Basis des Befehlssignals von der Befehlsbeurteilungseinrichtung (2),
eine Linsen-Steuereinheit (260) zur Steuerung des Projektionslinsenmechanismus nach Maßgabe eines Ausgangssignals von der Linsen-Steuereinrichtung (7),
eine Speichereinheit (250) zur Speicherung von Information, die von der Stromversorgungs-Steuereinrichtung (3), der Eingangsumschalteinrichtung (4), der Bildverarbeitungseinrichtung (5) und der Sprachverarbeitungseinrichtung (6) verarbeitet wird,
eine Anzeige-Steuereinrichtung (9) zur Steuerung einer Anzeige eines Betriebszustands des Flüssigkristall-Videoprojektors auf der Basis von Ausgangssignalen von der Stromversorgungs-Steuereinrichtung (3), der Eingangsumschalteinrichtung (4), der Bildverarbeitungseinrichtung (5), der Sprachverarbeitungseinrichtung (6) und der Linsen-Steuereinrichtung (7),
eine Anzeigeeinheit (130), die von einem Ausgangssignal von der Anzeige-Steuereinrichtung (9) gesteuert wird, und
eine Zeitgebereinrichtung (50) zur Ausführung einer Zeitsteuerung der jeweiligen Einrichtungen.

3. Flüssigkristall-Videoprojektor nach Anspruch 1 oder 2, bei dem die Speichereinheit (250) in der Lage ist, die gespeicherten Daten selbst dann zu halten, wenn die elektrische Leistung an den Flüssigkristall-Videoprojektor abgeschaltet ist.

4. Flüssigkristallvideoprojektor nach Anspruch 1, bei dem die Befehls- und Zustandsverarbeitungseinrichtung (100) von einem programmgesteuerten Mikrocomputer gebildet wird.

5. Flüssigkristall-Videoprojektor nach einem der vorhergehenden Ansprüche, bei dem die Eingabeeinheit (120) eine Fernsteuer-Empfangseinrichtung (200) enthält.

## Revendications

1. Un projecteur vidéo à cristal liquide comprenant :
une unité d'entrée (120) pour introduire des ordres de fonctionnement,
un détecteur de non-éclairage (210) destiné à détecter qu'une source lumineuse de projection n'éclaire pas ;
un détecteur de température (211) pour détecter la température à l'intérieur du projecteur vidéo à cristal liquide,
un ventilateur à vitesse variable (245) pour refroidir le projecteur vidéo à cristal liquide, la vitesse du ventilateur variant sous la dépendance du détecteur de température de façon à maintenir une température de fonctionnement prédéterminée,
des moyens de visualisation (130) pour visualiser une information d'état du projecteur vidéo à cristal liquide,
des moyens d'alarme (140) pour produire une alarme dans le cas d'un état anormal,
des moyens d'alimentation en énergie électrique,
des moyens d'enregistrement (250) pour enregistrer une information d'état du projecteur vidéo à cristal liquide, et
des moyens de traitement d'ordre et d'état (100) pour commander la source de lumière de projection, le ventilateur à vitesse variable, les moyens de visualisation et les moyens d'alarme sur la base d'ordres introduits à partir de l'unité d'entrée (120) et de signaux provenant du détecteur de non-éclairage (210) et du détecteur de température (211).

2. Un projecteur vidéo à cristal liquide selon la revendication 1, comprenant :
des moyens d'entrée (1) pour détecter des ordres introduits par l'unité d'entrée (120),
des moyens de discrimination d'ordre (2) pour émettre un signal d'ordre après la discrimination d'un état de fonctionnement sur la base d'un signal de sortie des moyens d'entrée (1),
des moyens de détection de non-éclairage (10) pour émettre un signal de non-éclairage de la source de lumière de projection, en réponse à un signal transmis à partir du détecteur de non-éclairage (210),
des moyens de détection de température (20) pour émettre un signal d'information de température en réponse à un signal transmis à partir du détecteur de température (211),
des moyens de commande d'alimentation (3), commandés sur la base du signal d'ordre provenant des moyens de discrimination d'ordre (2), du signal de non-éclairage de la source de lumière de projection et du signal d'information de température,
une unité de commande d'alimentation principale (220) pour effectuer une commande par tout ou rien de l'énergie électrique de l'alimentation principale (300), en réponse au signal de sortie des moyens de commande d'alimentation (3),
une unité de commande d'alimentation de source de lumière (221) pour effectuer une commande par tout ou rien de l'énergie électrique d'une alimentation de source de lumière (301), en réponse au signal de sortie des moyens de commande d'alimentation (3),
un moteur de ventilateur (245) ayant une vitesse de rotation variable, pour refroidir l'intérieur du projecteur vidéo à cristal liquide,
des moyens de commande de moteur de ventilateur (8) pour commander le fonctionnement du moteur de ventilateur (245) sur la base d'un signal de sortie des moyens de commande d'alimentation (3),
une unité de commande de moteur de ventilateur (240) pour commander le moteur de ventilateur (245) en réponse à un signal de sortie des moyens de commande de moteur de ventilateur (8),
des moyens d'émission d'alarme (30) pour émettre un signal d'alarme sur la base d'un signal de sortie des moyens de commande d'alimentation (3),
une unité d'alarme (140) qui est attaquée par le signal d'alarme provenant des moyens d'émission d'alarme (30),
des moyens de commande de commutation d'entrée (4) pour commuter une source de signal d'entrée conformément au signal d'ordre qui provient des moyens de discrimination d'ordre (2),
une unité de commutation d'entrée (230) commandée par un signal de sortie des moyens de commande de commutation d'entrée (30),
des moyens de traitement d'image (5) pour commander une image sur la base du signal d'ordre provenant des moyens de discrimination d'ordre (2),
des moyens de traitement de son (6) pour commander le volume sonore sur la base du signal d'ordre provenant des moyens de discrimination d'ordre (2),
un convertisseur N/A (270) commandé par les signaux de sortie des moyens de traitement d'image (5) et des moyens de traitement de son (6),
des moyens de commande d'objectif (7) pour commander un mécanisme d'objectif de projection sur la base du signal d'ordre provenant des moyens de discrimination d'ordre (2),
une unité de commande d'objectif (260) pour commander le mécanisme d'objectif de projection conformément à un signal de sortie provenant des moyens de commande d'objectif (7),
une unité d'enregistrement (250) pour enregistrer une information qui est traitée par les moyens de commande d'alimentation (3), les moyens de commutation d'entrée (4), les moyens de traitement d'image (5) et les moyens de traitement de son (6),
des moyens de commande de visualisation (9) pour commander une visualisation d'un état de fonctionnement du projecteur vidéo à cristal liquide sur la base de signaux de sortie provenant des moyens de commande d'alimentation (3), des moyens de commutation d'entrée (4), des moyens de traitement d'image (5), des moyens de traitement de son (6) et des moyens de commande d'objectif (7),
une unité de visualisation (130) commandée par un signal de sortie qui provient des moyens de commande de visualisation (9), et
des moyens de commande temporelle (50) pour effectuer une commande temporelle des moyens respectifs.

3. Le projecteur vidéo à cristal liquide selon les revendications 1 ou 2, dans lequel l'unité d'enregistrement (250) est conçue pour conserver les données enregistrées même en cas de coupure de l'alimentation électrique du projecteur vidéo à cristal liquide.

4. Le projecteur vidéo à cristal liquide selon la revendication 1, dans lequel les moyens de traitement d'ordre et d'état (100) consiste en un micro-ordinateur programmable.

5. Le projecteur vidéo à cristal liquide selon l'une quelconque des revendications précédentes, dans lequel l'unité d'entrée (120) comprend un moyen de réception commandé à distance.
